(19) **Europäisches Patentamt / European Patent Office / Office européen des brevets**

(11) **EP 4 371 647 B1**

(12) **FASCICULE DE BREVET EUROPÉEN**

(45) Date de publication et mention de la délivrance du brevet:
**19.03.2025 Bulletin 2025/12**

(21) Numéro de dépôt: **23203816.6**

(22) Date de dépôt: **16.10.2023**

(51) Classification Internationale des Brevets (IPC):
**B01D 53/04** *(2006.01)*       **F16K 11/00** *(2006.01)*
**C01B 13/02** *(2006.01)*       F16K 27/02 *(2006.01)*

(52) Classification Coopérative des Brevets (CPC):
**B01D 53/0446; C01B 13/0259; C01B 13/0277;**
**F16K 27/0263;** B01D 2256/12; B01D 2259/40003;
B01D 2259/402

(54) **MODULE DE DISTRIBUTION ET COMMUTATION DE GAZ ENTRE ADSORBEURS**

MODUL ZUR GASVERTEILUNG UND GASUMSCHALTUNG ZWISCHEN ADSORBERN

MODULE FOR DISTRIBUTING AND SWITCHING GAS BETWEEN ADSORBERS

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **20.10.2022 FR 2210871**

(43) Date de publication de la demande:
**22.05.2024 Bulletin 2024/21**

(73) Titulaire: **L'AIR LIQUIDE, SOCIETE ANONYME POUR L'ETUDE ET L'EXPLOITATION DES PROCEDES GEORGES CLAUDE
75007 Paris (FR)**

(72) Inventeurs:
• **PEREIRA, Patrick**
  **94500 Champigny-sur-Marne (FR)**
• **PEREZ, Maxime**
  **94500 Champigny-sur-Marne (FR)**
• **MONEREAU, Christian**
  **94500 Champigny-sur-Marne (FR)**

(74) Mandataire: **Air Liquide**
**L'Air Liquide S.A.
Direction de la Propriété Intellectuelle
75, Quai d'Orsay
75321 Paris Cedex 07 (FR)**

(56) Documents cités:
FR-A1- 2 769 851        FR-A1- 2 818 920
FR-A1- 3 078 635        US-A- 2 753 950
US-A1- 2018 280 865

EP 4 371 647 B1

**Description**

L'invention concerne un module de distribution et commutation de gaz entre adsorbeurs d'une unité de séparation ou purification par adsorption et concerne une telle unité comprenant ledit module.

De façon générale, les unités de séparation de gaz par adsorption sont dimensionnées pour produire une fraction à une pureté spécifiée, par exemple de l'hydrogène de pureté 99,999 % mole, de l'air épuré avec moins de 1ppm d'impuretés totales, de l'oxygène à 93% mole. Cette pureté étant atteinte, les performances de l'unité s'exprime alors généralement par un rendement d'extraction du produit et par l'énergie spécifique de production généralement exprimée en KWH/Nm3.

Un rendement élevé permet pour une production donnée, d'avoir à traiter moins de gaz d'alimentation. Une énergie spécifique faible permet de limiter la consommation énergétique. Ces deux critères jouent sur le résultat économique global de l'unité.

De façon générale les performances des unités de séparation de gaz par adsorption se sont améliorées au cours de ces dernières décennies grâce à des développements touchant d'une part les adsorbants, d'autre part le procédé lui-même, c'est-à-dire les cycles d'adsorption mis en jeu. Il en a résulté à la fois des unités plus complexes avec un nombre élevé d'étapes et adsorbeurs et la mise en œuvre d'adsorbants efficaces mais coûteux.

Cette évolution a donc entraîné en parallèle des efforts pour réduire la taille des adsorbeurs et le volume de la masse adsorbante. Ceci est obtenu par la réduction des temps de cycle. Ainsi par exemple les VPSA O2 produisant de l'oxygène à partir d'air, par exemple atmosphérique, utilisent à présent de la zéolite échangée au lithium de cinétique améliorée et ont ainsi connu des gains de 30% et plus sur l'énergie spécifique de production tout en voyant leur cycle passer de 3 minutes à 30 secondes.

Ces évolutions ont cependant induit un effet négatif sur les performances d'une majorité d'unités de séparation de gaz par adsorption ne leur permettant pas d'atteindre le gain escompté théorique. Cet écart provient de l'augmentation des volumes morts.

Dans ce type d'unités, on appelle généralement volumes morts, les volumes libres occupés par le fluide gazeux entre les vannes d'entrée et de sortie d'un adsorbeur. Ils comprennent les volumes libres dans l'adsorbeur proprement dit, c'est-à-dire en particulier la zone allant du fond de l'adsorbeur jusqu'à l'interface d'entrée avec l'adsorbant et la zone équivalente en sortie. Ils comprennent d'autre part, à l'extérieur de l'adsorbeur proprement dit, le volume des tuyauterie et équipements éventuels (piquages divers, filtres...) jusqu'aux vannes qui isolent l'adsorbeur des collecteurs généraux durant le déroulement du cycle (vanne d'alimentation, de résiduaire...).

On notera que ces différents volumes morts sont généralement rapportés au volume d'adsorbant contenu dans l'adsorbeur et de ce fait exprimés en pourcentage.

On notera également que le volume libre entre particules d'adsorbant à travers lequel circulent les différents flux gazeux est généralement compté à part et n'intervient pas dans le calcul des volumes morts.

Sans entrer dans le détail des nombreux cycles d'adsorption, on peut comprendre en quoi la présence des volumes morts est néfaste à l'obtention des meilleures performances atteignables. Un volume mort à l'amont de la masse adsorbante va contenir du gaz d'alimentation non utilisé qui va ensuite partir avec le gaz résiduaire. On perd alors le coût de la matière première (par exemple de l'hydrogène) et éventuellement l'énergie de pression du gaz d'alimentation (par exemple de l'air comprimé). L'évacuation de ce surplus de gaz avec le résiduaire peut également avoir un coût en cas de compression (cas d'une évacuation avec pompe à vide en particulier. En outre, le gaz résiduaire situé en fin de cycle dans ce volume amont va être entrainé avec le gaz d'alimentation utilisant inutilement une partie de la capacité d'adsorption de la masse adsorbante.

On peut raisonner de la même manière pour les volumes morts avals : perte de production, pollution du circuit de production par un gaz de régénération ou élution.

Il est logique de rapporter, comme mentionné précédemment, ces volumes morts au volume d'adsorbant car ce dernier est proportionnel au volume de gaz d'alimentation que l'on traite par cycle. Le pourcentage de volume mort est donc en quelque sorte représentatif d'un volume de gaz perdu sur le volume de gaz traité.

Ces effets sont connus de l'homme du métier mais ont pris de plus en plus d'importance au cours du temps, conséquence des développements techniques précédemment décrits et mis en œuvre sur ces unités.

En effet, raccourcir le temps de phase d'une unité par adsorption consiste à faire travailler plus souvent et plus vite l'adsorbant. Il en résulte que pour les mêmes débits d'alimentation, de production, de résiduaire, le volume nécessaire d'adsorbants est réduit. Les débits restant identiques, il n'y a à priori pas lieu de diminuer le diamètre de l'adsorbeur (en particulier pour éviter les risques d'attrition), ni le diamètre des différentes tuyauteries et vannes. Les fonds des adsorbeurs demeurent inchangés dans leur dimensionnement car celui-ci est dépendant du diamètre lui aussi inchangé de l'adsorbeur. Les volumes morts internes aux adsorbeurs augmentent donc également.

La perte de performances en résultant étant importante, l'homme du métier a également fait évoluer les équipements pour limiter les effets négatifs associés au développement des adsorbants et des cycles. Différentes méthodes ont été proposées pour réduire les volumes morts internes.

Pour les volumes morts externes, la tendance a été de réduire le diamètre des tuyauteries et de minimiser leur longueur. En contrepartie, on augmente évidemment les pertes de charge singulières (coudes, tés...) et les pertes de charge par friction. D'autre part, la réduction des longueurs de tuyauterie réduit la souplesse des tronçons de tuyauteries et augmente les contraintes qu'elles subissent.

Une autre manière de limiter les volumes morts a consisté à utiliser une même tuyauterie pour deux fonctions différentes, dès lors que les deux flux à véhiculer l'étaient toujours à des moments différents du cycle. Ainsi, la tuyauterie d'amenée du gaz de charge à un adsorbeur peut, dans une autre étape, servir sur une au moins une portion de sa longueur à véhiculer, en particulier à contre-courant du sens de circulation du gaz de charge, un flux de dépressurisation de l'adsorbeur ou un gaz d'élution.

Il y a donc toute une optimisation à faire entre volumes morts, pertes de charge et souplesse des tuyauteries. Pour les unités comportant plusieurs circuits en haute pression (supérieure à 10 bar absolus, préférentiellement supérieure à 25 bar abs), il est relativement facile de réduire sensiblement les volumes morts sans se pénaliser outre mesure. En effet, à ces pressions élevées, des pertes de charge de quelques dizaines de millibars ont un faible coût énergétique. La tendance va donc être vers la réduction des volumes morts au détriment de la perte de charge.

Il en va différemment pour les unités de séparation de gaz fonctionnant à basse pression, en particulier si le cycle nécessite un pompage sous vide. A la fois, les volumes morts et les pertes de charge ont un effet négatif très sensibles sur les performances.

US 2018/280865 A1 décrit ainsi un module pour unité de séparation par adsorption. Néanmoins la géométrie de distribution et commutation du gaz ne permet pas de réduire les pertes de charges, sans augmenter les volumes morts et les contraintes mécaniques.

Il y a donc un besoin de développer un système permettant de réduire les volumes morts tout en créant un minimum de pertes de charge et en ne générant pas de contraintes mécaniques excessives.

L'invention a pour objet un module pour une unité de séparation ou purification par adsorption, le module étant configuré pour la distribution et la commutation d'un gaz entre un premier adsorbeur, un deuxième adsorbeur, un collecteur de gaz d'alimentation et un collecteur de gaz évacué de ladite unité, le module comprenant :

- une conduite d'alimentation configurée pour être raccordée fluidiquement au collecteur de gaz d'alimentation, la conduite d'alimentation bifurquant au niveau d'une bifurcation en une première conduite configurée pour être raccordée fluidiquement au premier adsorbeur et une deuxième conduite configurée pour être raccordée fluidiquement au deuxième adsorbeur,
- une troisième conduite et une quatrième conduite et une jonction de la troisième conduite et de la quatrième conduite en une conduite d'évacuation configurée pour être raccordée fluidiquement au collecteur de gaz évacué,
- un premier raccord entre la première et la troisième conduite,
- un deuxième raccord entre la deuxième et la quatrième conduite,

la conduite d'alimentation ensemble avec la première conduite formant une première voie d'alimentation du premier adsorbeur en gaz d'alimentation issu du collecteur de gaz d'alimentation,
la conduite d'alimentation ensemble avec la deuxième conduite formant une deuxième voie d'alimentation du deuxième adsorbeur en gaz d'alimentation issu du collecteur de gaz d'alimentation,
une portion de la première conduite ensemble avec la troisième conduite et la conduite d'évacuation formant une troisième voie d'évacuation du gaz évacué du premier adsorbeur vers le collecteur de gaz évacué,
une portion de la deuxième conduite ensemble avec la quatrième conduite et la conduite d'évacuation formant une quatrième voie d'évacuation du gaz évacué du deuxième adsorbeur vers le collecteur de gaz évacué,
le module comprenant :

- un premier obturateur disposé entre la bifurcation et le premier raccord, le premier obturateur étant configuré pour autoriser ou interdire la circulation du gaz dans la première voie,
- un deuxième obturateur disposé entre la bifurcation et le deuxième raccord, le deuxième obturateur étant configuré pour autoriser ou interdire la circulation du gaz dans la deuxième voie,
- un troisième obturateur disposé entre le premier raccord et la jonction, le troisième obturateur étant configuré pour autoriser ou interdire la circulation du gaz dans la troisième voie,
- un quatrième obturateur disposé entre le deuxième raccord et la jonction, le quatrième obturateur étant configuré pour autoriser ou interdire la circulation du gaz dans la quatrième voie,

chaque obturateur comprenant, dans le sens de circulation dans sa voie respective, une entrée et une sortie,
module dans lequel :

- la première voie comprend au moins un coude de redirection du gaz d'alimentation vers le premier obturateur selon un angle A1 entre une direction d'écoulement dudit gaz d'alimentation en entrée de la bifurcation et une direction d'écoulement dudit gaz d'alimentation à l'entrée du premier obturateur et comprend au moins un coude de redirection du gaz d'alimentation vers le premier adsorbeur selon un angle A5 entre une direction d'écoulement dudit gaz d'alimentation à la sortie du premier obturateur et une direction d'écoulement dudit gaz d'alimentation en sortie du premier raccord,

- la deuxième voie comprend au moins un coude de redirection du gaz d'alimentation vers le deuxième obturateur selon un angle A2 entre une direction d'écoulement dudit gaz d'alimentation en entrée de la bifurcation et une direction d'écoulement dudit gaz d'alimentation à l'entrée du deuxième obturateur et comprend au moins un coude de redirection du gaz d'alimentation vers le deuxième adsorbeur selon un angle A7 entre une direction d'écoulement dudit gaz d'alimentation à la sortie du deuxième obturateur et une direction d'écoulement dudit gaz d'alimentation en sortie du deuxième raccord,

- la troisième voie comprend au moins un coude de redirection du gaz évacué du premier adsorbeur vers le troisième obturateur selon un angle A6 entre une direction d'écoulement dudit gaz évacué en entrée du premier raccord et une direction d'écoulement dudit gaz évacué à l'entrée du troisième obturateur et comprend au moins un coude de redirection du gaz évacué du premier adsorbeur vers le collecteur de gaz évacué selon un angle A3 entre une direction d'écoulement dudit gaz évacué à la sortie du troisième obturateur et une direction d'écoulement dudit gaz évacué en sortie de la jonction,

- la quatrième voie comprend au moins un coude de redirection du gaz évacué du deuxième adsorbeur vers le quatrième obturateur selon un angle A8 entre une direction d'écoulement dudit gaz évacué en entrée du deuxième raccord et une direction d'écoulement dudit gaz évacué à l'entrée du quatrième obturateur et comprend au moins un coude de redirection du gaz évacué du deuxième adsorbeur vers le collecteur de gaz évacué selon un angle A4 entre une direction d'écoulement dudit gaz évacué à la sortie du quatrième obturateur et une direction d'écoulement dudit gaz évacué en sortie de la jonction,

caractérisé en ce que chacun des angles A1, A2, A3, A4, A5, A6, A7 et A8 est inférieur à 90°. Le module ainsi dimensionné offre une géométrie de distribution et commutation du gaz limitant les changements brusques de direction et les obstacles, ce qui permet de réduire les pertes de charges, sans augmenter les volumes morts et les contraintes mécaniques. Aucun des angles A1, A2, A3, A4, A5, A6, A7 et A8 n'est supérieur ou égal à 90°.

Selon un mode de réalisation, chacun des coudes est configuré pour rediriger le gaz selon un angle inférieur à 90°.

Selon un mode de réalisation, chacun des angles A1, A2, A3, A4, A5, A6, A7 et A8 est compris entre 20° et 80°, bornes incluses.

Selon un mode de réalisation :

- A1 + A5 est inférieur ou égal à 90°,
- A2 + A7 est inférieur ou égal à 90°,
- A6 + A3 est inférieur ou égal à 90°,
- et/ou A8 + A4 est inférieur ou égal à 90°.

Selon un mode de réalisation :

- la première voie comprend un seul coude de redirection du gaz d'alimentation selon l'angle A1 et/ou un seul coude de redirection du gaz d'alimentation selon l'angle A5,
- la deuxième voie comprend un seul coude de redirection du gaz d'alimentation selon l'angle A2 et/ou un seul coude de redirection du gaz d'alimentation selon l'angle A7,
- la troisième voie comprend un seul coude de redirection du gaz évacué selon l'angle A6 et/ou un seul coude de redirection du gaz évacué selon l'angle A3 et/ou
- la quatrième voie comprend un seul coude de redirection du gaz évacué selon l'angle A8 et/ou un seul coude de redirection du gaz évacué selon l'angle A4.

En particulier, le coude de redirection selon l'angle A1 et le coude de redirection selon l'angle A2 sont disposés sur la bifurcation, le coude de redirection selon l'angle A3 et le coude de redirection selon l'angle A4 sont disposés sur la jonction, le coude de redirection selon l'angle A5 et le coude de redirection selon l'angle A6 sont disposés sur le premier raccord et/ou le coude de redirection selon l'angle A7 et le coude de redirection selon l'angle A8 sont disposés sur le deuxième raccord.

Selon un mode de réalisation, le module présente une première symétrie par rapport à un premier plan de symétrie passant par la bifurcation et la jonction. En particulier, le module présente également une deuxième symétrie par rapport à un deuxième plan de symétrie passant par le premier raccord et le deuxième raccord, le deuxième plan de symétrie étant perpendiculaire au premier plan de symétrie.

Selon un mode de réalisation, l'ensemble des conduites s'étend dans un même plan d'extension.

Selon un mode de réalisation, la section des conduites est circulaire. En particulier, le diamètre interne des conduites est compris entre 6" et 48" (entre 0,15 et 1,22 mètres), de préférence entre 8" et 40" entre (entre 0,2 et 1,02 mètres).

Selon un mode de réalisation, la longueur entre la bifurcation et le premier raccord, entre la bifurcation et le deuxième raccord, entre le premier raccord et la jonction et/ou entre le deuxième raccord et la jonction d'une conduite est comprise entre 1 fois et 10 fois D, D étant le diamètre équivalent hydraulique de la conduite. En particulier, le diamètre équivalent hydraulique de la conduite est le diamètre interne de la conduite lorsque celle-ci est de section circulaire.

Selon un mode de réalisation:

- les conduites formant au moins une des première, deuxième, troisième et quatrième voies ont un diamètre équivalent hydraulique,
- Dc est le diamètre équivalent hydraulique des conduites au niveau d'au moins un coude d'au moins une des première, deuxième, troisième et quatrième voie,
- Rc est le rayon de courbure du au moins un coude au centre des conduites,
- et Rc/Dc est compris entre 0,05 et 5, en particulier est compris entre 0,05 et 2,5, en particulier est compris entre 0,5 et 1,5.

En particulier, pour chacun des coudes du module, Rc/Dc est compris entre 0,05 et 5, en particulier est compris entre 0,05 et 2,5, en particulier est compris entre 0,5 et 1,5. En particulier, le diamètre équivalent hydraulique des conduites est le diamètre interne des conduites lorsque celles-ci sont de section circulaire. Selon un mode de réalisation particulier, les coudes ont un rayon de courbure nul. Chacune des conduites est notamment essentiellement rectiligne. En particulier, les conduites forment ensemble un quadrilatère convexe. Préférentiellement, les coudes ont un rayon de courbure non-nul.

Selon un mode de réalisation, le module comprend :

- une bride de fixation et connexion fluidique de la première conduite à l'entrée du premier obturateur et une bride de fixation et connexion fluidique de la première conduite à la sortie du premier obturateur,
- une bride de fixation et connexion fluidique de la deuxième conduite à l'entrée du deuxième obturateur et une bride de fixation et connexion fluidique de la deuxième conduite à la sortie du deuxième obturateur,
- une bride de fixation et connexion fluidique de la troisième conduite à l'entrée du troisième obturateur et une bride de fixation et connexion fluidique de la troisième conduite à la sortie du troisième obturateur et
- une bride de fixation et connexion fluidique de la quatrième conduite à l'entrée du quatrième obturateur et une bride de fixation et connexion fluidique de la quatrième conduite à la sortie du quatrième obturateur.

Selon un mode de réalisation, les obturateurs sont des vannes d'arrêt, des vannes Tout ou Rien (TOR) par exemple. Alternativement, les obturateurs sont des vannes proportionnelles, telles que des vannes papillons, configurées pour réguler le débit de circulation dans la voie respective. Dans un mode de réalisation, les obturateurs sont configurés pour laisser la section maximale de circulation de la conduite libre pour la circulation du gaz lorsqu'ils sont en position ouverte.

Selon un mode de réalisation, l'ensemble des conduites comprend une pluralité de tube de circulation des gaz et au moins une liaison fluidique entre deux des tubes, ladite liaison fluidique étant configurée pour relier de façon étanche lesdits deux tubes et assurer un degré de liberté sur la position desdits deux tubes l'un par rapport à l'autre. La jonction fluidique est par exemple une bride à épaulement de soudure ou une collerette à emboîtement.

Selon un mode de réalisation, le module comprend une structure support, l'ensemble des conduites étant monté sur ladite structure support, le module comprenant des moyens de manutention fixés à la structure support.

L'invention a également pour objet une unité de séparation ou purification par adsorption comprenant au moins un couple d'un premier adsorbeur et d'un deuxième adsorbeur, au moins deux collecteurs dont un collecteur de gaz d'alimentation et un collecteur de gaz évacué et le module tel que décrit précédemment, unité dans laquelle :

- le collecteur de gaz d'alimentation est connecté fluidiquement à la conduite d'alimentation,
- le collecteur de gaz évacué est connecté fluidiquement à la conduite d'évacuation,
- le premier adsorbeur est connecté fluidiquement à la première conduite,
- le deuxième adsorbeur est connecté fluidiquement à la deuxième conduite.

Selon un mode de réalisation, l'unité comprend N couples de deux adsorbeurs et N modules tel que décrit précédemment, avec N > 1. En particulier, l'unité comprend N couples de deux adsorbeurs et 2N modules tel que décrit précédemment.

Selon un mode de réalisation, les adsorbeurs comprennent des grappes de modules d'adsorption, les modules d'adsorption opérant en parallèle.

Selon un mode de réalisation, l'unité de séparation ou purification par adsorption est une unité modulée en température (unité TSA).

Selon un mode de réalisation, le collecteur de gaz d'alimentation est un collecteur d'un gaz de charge, l'unité de séparation ou purification étant configurée pour, lors d'une étape d'adsorption, séparer dans l'un des premier et deuxième adsorbeurs ledit gaz de charge en un gaz produit et un gaz résiduaire et le collecteur de gaz évacué est un collecteur dudit gaz résiduaire.

En particulier, l'unité comprend un collecteur d'un gaz de régénération ou élution, pour, suite à l'étape d'adsorption, régénérer le premier ou le deuxième adsorbeur et un collecteur dudit gaz produit (collecteur de gaz produit),

le module est un premier module et l'unité comprend un deuxième module tel que décrit précédemment et :

- la conduite d'alimentation du deuxième module est connectée fluidiquement au collecteur de gaz de régénération ou élution,
- la conduite d'évacuation du deuxième module est connectée fluidiquement au collecteur du gaz produit,
- la première conduite du deuxième module est connectée fluidiquement au premier adsorbeur,
- la deuxième conduite du deuxième module est connectée fluidiquement au deuxième adsorbeur.

En particulier, le premier adsorbeur comprend une première extrémité et une deuxième extrémité opposée à la première extrémité, le deuxième adsorbeur comprend une troisième extrémité située au niveau de la première extrémité, le deuxième adsorbeur comprenant une quatrième extrémité opposée à la troisième extrémité et située au niveau de la deuxième extrémité, le premier module étant agencé dans l'unité entre le premier et le deuxième adsorbeur, au niveau de la première et de la troisième extrémité, le deuxième module étant agencé dans l'unité entre le premier et le deuxième adsorbeur, notamment au niveau de la deuxième et de la quatrième extrémité. En particulier, l'unité comprend N modules agencés entre le premier et le deuxième adsorbeur, au niveau de la première et de la troisième extrémité et N modules agencés entre le premier et le deuxième adsorbeur, notamment au niveau de la deuxième et de la quatrième extrémité.

Alternativement, l'unité de séparation ou purification est configurée pour, lors d'une étape d'adsorption, séparer dans l'un des premier et deuxième adsorbeur un gaz de charge en un gaz produit et un gaz résiduaire, le collecteur de gaz d'alimentation est un collecteur d'un gaz de régénération ou élution pour, suite à l'étape d'adsorption, régénérer le premier ou le deuxième adsorbeur, et le collecteur de gaz évacué est un collecteur dudit gaz produit.

Selon un mode de réalisation, l'unité de séparation ou purification par adsorption est une unité modulée en pression. En particulier, l'unité est configurée pour produire un flux enrichi en oxygène à partir d'air, par exemple atmosphérique, la teneur en oxygène de la production étant préférentiellement comprise entre 88 % et 94 % mole, notamment entre 90 % et 93 % mole. Il s'agit par exemple d'une unité VSA ou VPSA dans laquelle une pompe à vide est connectée fluidiquement au collecteur de gaz résiduaire. La pompe à vide est notamment une soufflante (blower en anglais).

L'unité de séparation ou purification peut mettre en œuvre un procédé de distribution et commutation, l'unité étant alimentée en gaz d'alimentation et de laquelle un gaz évacué est extrait,

le procédé comprenant une première étape, la première étape comprenant les sous-étapes suivantes :

- ouverture du premier obturateur et du quatrième obturateur,
- fermeture du deuxième obturateur et du troisième obturateur,
- circulation du gaz d'alimentation dans le collecteur de gaz d'alimentation et dans la première voie,
- redirection du gaz d'alimentation vers le premier obturateur selon l'angle A1,
- circulation du gaz d'alimentation à travers le premier obturateur,
- redirection du gaz d'alimentation vers le premier adsorbeur selon l'angle A5,
- alimentation du premier adsorbeur en gaz d'alimentation,
- extraction du deuxième adsorbeur du gaz évacué,
- circulation du gaz évacué dans la quatrième voie,
- redirection du gaz évacué vers le quatrième obturateur selon l'angle A8,
- circulation du gaz évacué à travers le quatrième obturateur,
- redirection du gaz évacué vers le collecteur de gaz évacué selon un l'angle A4,

le procédé comprenant une deuxième étape, la deuxième étape comprenant les sous-étapes suivantes :

- ouverture du deuxième obturateur et du troisième obturateur,
- fermeture du premier obturateur et du quatrième obturateur,
- circulation du gaz d'alimentation dans le collecteur de gaz d'alimentation et dans la deuxième voie,
- redirection du gaz d'alimentation vers le deuxième obturateur selon l'angle A2,
- circulation du gaz d'alimentation à travers le deuxième obturateur,
- redirection du gaz d'alimentation vers le deuxième adsorbeur selon l'angle A7,
- alimentation en gaz d'alimentation du deuxième adsorbeur,
- extraction du premier adsorbeur du gaz évacué
- circulation du gaz évacué dans la troisième voie,
- redirection du gaz évacué vers le troisième obturateur selon l'angle A6,
- circulation du gaz évacué à travers le troisième obturateur,
- redirection du gaz évacué vers le collecteur de gaz évacué selon l'angle A3.

L'unité comprenant un collecteur d'un gaz de charge et un collecteur de gaz résiduaire peut mettre en œuvre procédé décrit plus haut, procédé dans lequel le gaz d'alimentation est un gaz de charge et le gaz d'évacuation est un gaz résiduaire,

procédé dans lequel la première étape comprend en outre les étapes suivantes :

- séparation dans le premier adsorbeur du gaz de charge en un premier gaz résiduaire adsorbé et un premier gaz produit,
- régénération ou élution du deuxième adsorbeur et désorption d'un deuxième gaz résiduaire adsorbé dans le deuxième adsorbeur,

procédé dans lequel la deuxième étape comprend en outre les étapes suivantes :

- séparation dans le deuxième adsorbeur régénéré lors de la première étape du gaz de charge en le deuxième gaz résiduaire adsorbé et un deuxième gaz produit,
- régénération ou élution du premier adsorbeur et désorption du premier gaz résiduaire adsorbé dans le premier adsorbeur lors de la première étape.

L'unité comprenant un collecteur d'un gaz de régénération ou élution et un collecteur de gaz produit peut mettre en œuvre le procédé décrit plus haut, procédé dans lequel le gaz d'alimentation est un gaz de régénération ou élution et le gaz évacué est un gaz produit, l'unité étant alimentée en gaz de charge,

procédé dans lequel la première étape comprend en outre les étapes suivantes :

- régénération ou élution du premier adsorbeur alimenté en gaz de régénération ou élution et désorption d'un premier gaz résiduaire adsorbé dans le premier adsorbeur,
- séparation du gaz de charge dans le deuxième adsorbeur en un deuxième gaz résiduaire adsorbé et un deuxième gaz produit,

procédé dans lequel la deuxième étape comprend en outre les étapes suivantes :

- régénération ou élution du deuxième adsorbeur alimenté en gaz de régénération ou élution et désorption du deuxième gaz résiduaire adsorbé lors de la première étape,
- séparation dans le premier adsorbeur régénéré durant la première étape du gaz de charge en le premier gaz résiduaire adsorbé et un premier gaz produit.

Selon une mise en œuvre, le premier procédé de distribution et commutation comprend une étape d'équilibrage durant laquelle les premier, deuxième, troisième et quatrième obturateurs sont fermés, isolant ainsi le premier et le deuxième adsorbeur du collecteur de gaz d'alimentation et du collecteur de gaz évacué.

L'unité comprenant un collecteur d'un gaz de charge, un collecteur de gaz résiduaire, un collecteur d'un gaz de régénération ou élution et un collecteur de gaz produit, l'unité comprenant le premier et le deuxième module tels que décrits précédemment peut mettre en œuvre le premier et le deuxième procédé de commutation et distribution, la première étape du premier procédé ayant lieu durant la deuxième étape du deuxième procédé, la deuxième étape du premier procédé ayant lieu durant la première étape du deuxième procédé.

L'invention sera mieux comprise à la lecture de la description d'un mode de réalisation non limitant :

La figure 1 représente une vue schématique de l'unité de séparation ou purification par adsorption ;
La figure 2 représente un exemple de bifurcation, de jonction ou de raccord du module selon l'invention ;
La figure 3 représente un exemple de procédé de fabrication d'une bifurcation, d'une jonction ou d'un raccord ;
La figure 4 représente une vue de dessus d'un module selon l'invention ;
La figure 5 représente le premier procédé de commutation et distribution mise en œuvre par une unité comprenant un module selon l'invention ;
La figure 6 représente le deuxième procédé de commutation et distribution mise en œuvre par une unité comprenant un module selon l'invention ;
La figure 7 représente une unité comprenant deux modules selon l'invention.

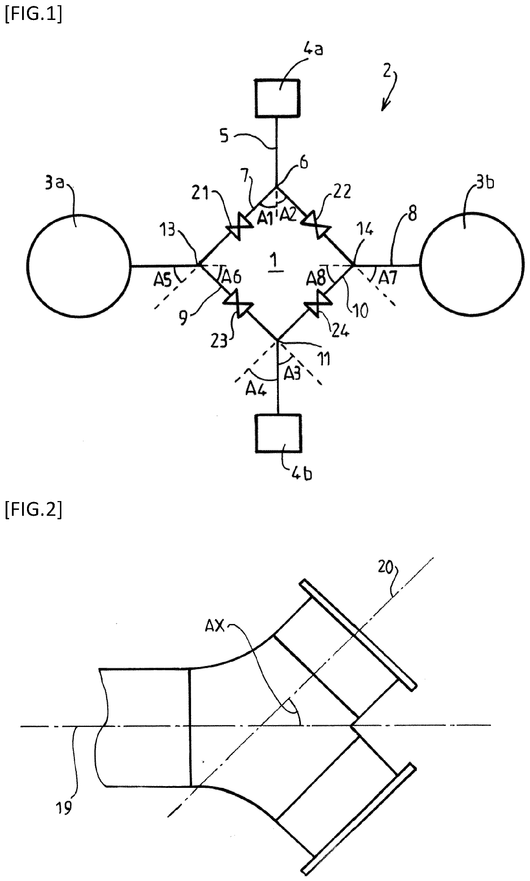

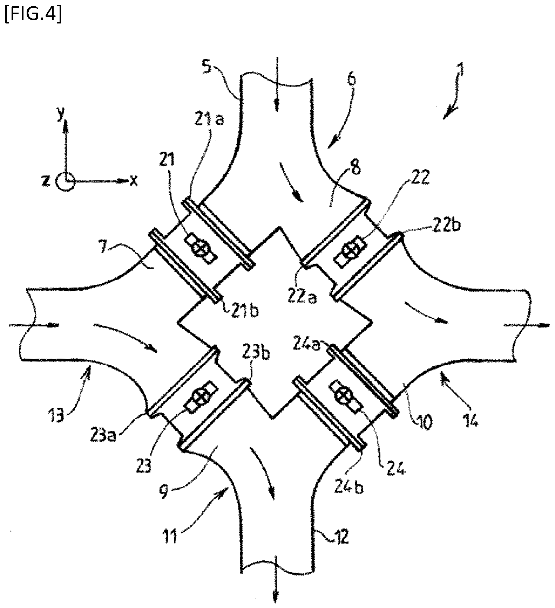

Les figures 1 et 4 représentent un module 1 pour une unité 2 de séparation ou purification par adsorption. Le module 1 est configuré pour la distribution et la commutation d'un gaz (module de distribution et commutation) entre différents composants de l'unité, parmi lesquels un premier adsorbeur 3a, un deuxième adsorbeur 3b, un collecteur 4a de gaz d'alimentation et un collecteur 4b de gaz évacué.

Par gaz d'alimentation, on entend ici un flux gazeux qui pénètre au cours du cycle successivement dans les différents adsorbeurs. Il peut s'agir du gaz de charge à fractionner ou à épurer dans l'unité mais également d'un flux gazeux recyclé, d'un gaz de régénération (cas d'une unité TSA) ou élution (cas d'une unité PSA) issu de l'unité ou de provenance externe à cette unité. De la même façon, le gaz évacué peut être la production, qu'elle soit produite à la haute ou à la basse pression du cycle, un gaz de dépressurisation, un flux gazeux issu de la phase de régénération ou élution.

Le module 1 comprend ainsi une conduite d'alimentation 5 (voir la figure 4) configurée pour être raccordée fluidiquement au collecteur 4a d'alimentation. La conduite d'alimentation 5 bifurque au niveau d'une bifurcation 6 en une première conduite 7 configurée pour être raccordée fluidiquement au premier adsorbeur 3a et une deuxième conduite 8 configurée pour être raccordée fluidiquement au deuxième adsorbeur 3b. Le module 1 comprend également une troisième conduite 9 et une quatrième conduite 10 et une jonction 11 de la troisième conduite 9 et de la quatrième conduite 10 en une conduite d'évacuation 12. La conduite d'évacuation 12 est configurée pour être raccordée fluidiquement au collecteur 4b de gaz évacué. Le module 1 comprend enfin un premier raccord 13 entre la première conduite 7 et la troisième conduite 9 et un deuxième raccord 14 entre la deuxième conduite 8 et la quatrième conduite 10.

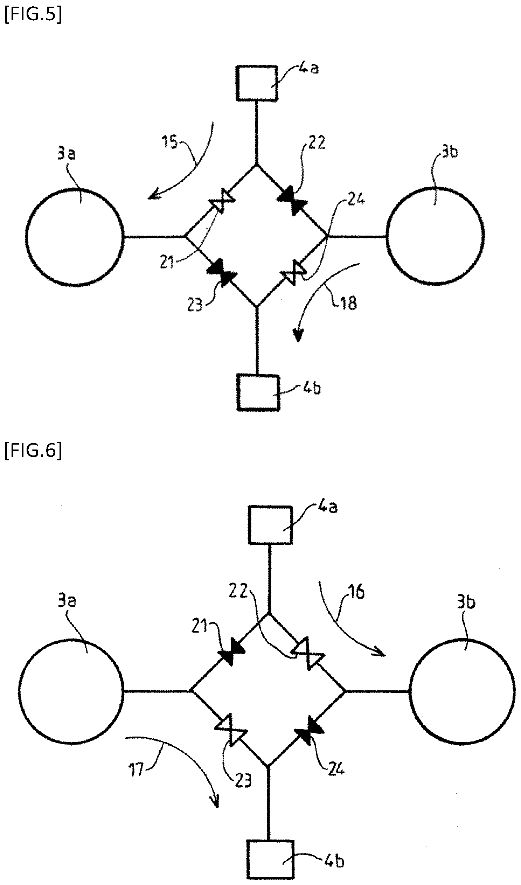

Le module 1 comprend ainsi plusieurs voies de circulation du gaz. La conduite d'alimentation 5 ensemble avec la première conduite 7 forment une première voie 15 d'alimentation du premier adsorbeur 3a en gaz d'alimentation issu du collecteur 4a de gaz d'alimentation (voir figure 5). La conduite d'alimentation 5 ensemble avec la deuxième conduite 8 forment une deuxième voie 16 d'alimentation du deuxième adsorbeur 3b en gaz d'alimentation issu du collecteur 4a de gaz d'alimentation (voir figure 6). Une portion de la première conduite 7, configurée pour être raccordée au premier adsorbeur 3a et disposée, sur la première conduite 7, en amont du premier raccord 13 dans le sens de circulation du gaz évacué issu du premier adsorbeur 3a constitue, ensemble avec la troisième conduite 9 et la conduite d'évacuation 12, une troisième voie 17 d'évacuation du gaz évacué issu du premier adsorbeur 3a vers le collecteur 4b de gaz évacué. Une portion de la deuxième conduite 8, configurée pour être raccordée au deuxième adsorbeur 3b et disposée, sur la deuxième conduite 8, en amont du deuxième raccord 14 dans le sens de circulation du gaz évacué issu du deuxième adsorbeur 3b constitue, ensemble avec la quatrième conduite 10 et la conduite d'évacuation 12, une quatrième voie 18 d'évacuation du gaz évacué issu du deuxième adsorbeur 3b vers le collecteur 4b de gaz évacué.

Le module 1 comprend un premier obturateur 21 disposé sur la première voie 15 entre la bifurcation 6 et le premier raccord 13. Le premier obturateur est configuré pour autoriser ou interdire la circulation du gaz dans la première voie 15. Le premier obturateur 21 comprend, dans le sens de circulation du gaz dans la première voie 15 une entrée 21a pour ledit gaz et une sortie 21b pour ledit gaz.

Le module 1 comprend un deuxième obturateur 22 disposé sur la deuxième voie 16 entre la bifurcation 6 et le deuxième raccord 14. Le deuxième obturateur 22 est configuré pour autoriser ou interdire la circulation du gaz dans la deuxième voie 16. Le deuxième obturateur 22 comprend, dans le sens de circulation du gaz dans la deuxième voie 16 une entrée 22a pour ledit gaz et une sortie 22b pour ledit gaz.

Le module 1 comprend un troisième obturateur 23 disposé sur la troisième voie 17 entre le premier raccord 13 et la jonction 11. Le troisième obturateur est configuré pour autoriser ou interdire la circulation du gaz dans la circulation dans la troisième voie 17. Le troisième obturateur comprend, dans le sens de circulation du gaz dans la troisième voie 17 une entrée 23a pour ledit gaz et une sortie 23b pour ledit gaz.

Le module 1 comprend un quatrième obturateur 24 disposé sur la quatrième voie 18 entre le deuxième raccord 14 et la jonction 11. Le quatrième obturateur 24 est configuré pour autoriser ou interdire la circulation du gaz dans la circulation dans la quatrième voie 18. Le quatrième obturateur 24 comprend, dans le sens de circulation du gaz dans la quatrième voie 18 une entrée 24a pour ledit gaz et une sortie 24b pour ledit gaz.

La première voie 15 comprend au moins un coude de redirection du gaz d'alimentation circulant vers le premier obturateur 21 selon un angle A1 entre une direction générale d'écoulement dans la conduite d'alimentation 5 dudit gaz d'alimentation, en entrée de la bifurcation 6, immédiatement en amont de la bifurcation 6 dans le sens de circulation du gaz d'alimentation dans la première voie 15, avant que la conduite d'alimentation 5 ne bifurque et une direction générale d'écoulement dans la première conduite 7 dudit gaz d'alimentation, à l'entrée 21a du premier obturateur 21, immédiatement en amont du premier obturateur 21 dans le sens de circulation du gaz d'alimentation dans la première voie 15. La première voie 15 comprend au moins un coude de redirection du gaz d'alimentation circulant vers le premier adsorbeur 3a selon un angle A5 entre une direction générale d'écoulement dans la première conduite 7 dudit gaz d'alimentation, à la sortie 21b du premier obturateur 21, immédiatement en aval du premier obturateur 21 dans le sens de circulation du gaz d'alimentation dans la première voie 15 et une direction générale d'écoulement dans la première conduite 7 dudit gaz d'alimentation, en sortie du premier raccord 13, immédiatement en aval du premier raccord 13 dans le sens de circulation du gaz d'alimentation dans la première voie 15, après que la troisième conduite 9 soit raccordée à la première conduite 7.

La deuxième voie 16 comprend au moins un coude de redirection du gaz d'alimentation circulant vers le deuxième obturateur 22 selon un angle A2 entre une direction générale d'écoulement dans la conduite d'alimentation 5 dudit gaz d'alimentation, en entrée de la bifurcation 6, immédiatement en amont de la bifurcation 6 dans le sens de circulation du gaz d'alimentation dans la deuxième voie 16, avant que la conduite d'alimentation 5 ne bifurque et une direction générale d'écoulement dans la deuxième conduite 8 dudit gaz d'alimentation, à l'entrée 22a du deuxième obturateur 22, immédiatement en amont du deuxième obturateur 22 dans le sens de circulation du gaz d'alimentation dans la deuxième voie 16. La deuxième voie 16 comprend au moins un coude de redirection du gaz d'alimentation circulant vers le deuxième adsorbeur 3b selon un angle A7 entre une direction générale d'écoulement dans la deuxième conduite 8 dudit gaz d'alimentation, à la sortie 22b du deuxième obturateur 22, immédiatement en aval du deuxième obturateur 22 dans le sens de circulation du gaz d'alimentation dans la deuxième voie 16 et une direction générale d'écoulement dans la deuxième conduite 8 dudit gaz d'alimentation, en sortie du deuxième raccord 14, immédiatement en aval du deuxième raccord 14 dans le sens de circulation du gaz d'alimentation dans la première voie 15, après que la quatrième conduite 10 soit raccordée à la deuxième conduite 8.

La troisième voie 17 comprend au moins un coude de redirection du gaz évacué issu du premier adsorbeur 3a circulant vers le troisième obturateur 23 selon un angle A6 entre une direction générale d'écoulement dans la première conduite 7 dudit gaz évacué, en entrée du premier raccord 13, immédiatement en amont du premier raccord 13 dans le sens de circulation du gaz évacué dans la troisième voie 17, avant que la troisième conduite 9 ne soit raccordée à la première conduite 7 et une direction générale d'écoulement dans la troisième conduite 9 dudit gaz évacué, à l'entrée 23a du troisième obturateur 23, immédiatement en amont troisième obturateur 23 dans le sens de circulation du gaz évacué dans la troisième voie 17. La troisième voie 17 comprend au moins un coude de redirection du gaz évacué issu du premier adsorbeur 3a circulant vers le collecteur 4b de gaz évacué selon un angle A3 entre une direction générale d'écoulement dans la troisième conduite 9 dudit gaz évacué, à la sortie 23b du troisième obturateur 23, immédiatement en aval du troisième obturateur 23 dans le sens de circulation du gaz évacué dans la troisième voie 17 et une direction générale d'écoulement dans la conduite d'évacuation 12 dudit gaz évacué, en sortie de la jonction 11, immédiatement en aval de la jonction 11 dans le sens de circulation du gaz évacué dans la troisième voie 17, après que la troisième conduite 9 soit jointe à la quatrième conduite 10 en la conduite d'évacuation 12.

La quatrième voie 18 comprend au moins un coude de redirection du gaz évacué issu du deuxième adsorbeur 3b circulant vers le quatrième obturateur 24 selon un angle A8 entre une direction générale d'écoulement dans la deuxième conduite 8 dudit gaz évacué, en entrée du deuxième raccord 14, immédiatement en amont du deuxième raccord 14 dans le sens de circulation du gaz évacué dans la quatrième voie 18, avant que la quatrième conduite 10 ne soit raccordée à la deuxième conduite 8 et une direction générale d'écoulement dans la quatrième conduite 10 dudit gaz évacué, à l'entrée 24a du quatrième obturateur 24, immédiatement en amont quatrième obturateur 24 dans le sens de circulation du gaz évacué dans la quatrième voie 18. La quatrième voie 18 comprend au moins un coude de redirection du gaz évacué issu du deuxième adsorbeur 3b circulant vers le collecteur 4b de gaz évacué selon un angle A4 entre une direction générale d'écoulement dans la quatrième conduite 10 dudit gaz évacué, à la sortie 24b du quatrième obturateur 24, immédiatement en aval du quatrième obturateur 24 dans le sens de circulation du gaz évacué dans la quatrième voie 18 et une direction générale d'écoulement dans la conduite d'évacuation 12 dudit gaz évacué, en sortie de la jonction 11, immédiatement en aval de la jonction 11, dans le sens de circulation du gaz évacué dans la quatrième voie 18, après que la troisième conduite 9 soit jointe à la quatrième conduite 10 en la conduite d'évacuation 12.

Les voies comprennent donc des coudes ou tubes coudés, ce terme couvrant tous les rayons de courbure praticables dans le cadre de l'invention.

Les coudes selon l'invention peuvent être situés sur la première, la deuxième, la troisième ou la quatrième conduite 10, sur le premier raccord 13, à cheval entre la première et la troisième conduite 9, sur le deuxième raccord 14, à cheval entre la deuxième et la quatrième conduite 10, sur la bifurcation 6, à cheval entre la conduite d'alimentation 5 et la première conduite 7 ou la deuxième conduite 8 ou sur la jonction 11, à cheval entre la conduite d'évacuation 12 et la troisième conduite 9 ou la quatrième conduite 10.

Selon l'invention, chacun des angles A1, A2, A3, A4, A5, A6, A7 et A8 est inférieur à 90°. Le ou les coudes de chacune des voies, pris dans leur ensemble, provoque(nt) donc une redirection du gaz selon un angle maximum A1, A2, A3, A4, A5, A6, A7 ou A8 strictement inférieur à 90°. Le module 1 ainsi dimensionné offre une géométrie de distribution et commutation du gaz limitant les changements brusques de direction et les obstacles, ce qui permet de réduire les pertes de charges, sans augmenter les volumes morts et les contraintes mécaniques. Aucun des angles A1, A2, A3, A4, A5, A6, A7 et A8 n'est supérieur ou égal à 90°.

Dans le mode de réalisation décrit, chacun des coudes est configuré pour rediriger le gaz selon un angle inférieur à 90°. Autrement dit, aucun des coudes n'est configuré pour rediriger le gaz selon un angle supérieur ou égal à 90°, chacun des angles A1, A2, A3, A4, A5, A6, A7 et A8 est strictement inférieur à 90°. Le module 1 comprend donc au moins 8 coudes. Un coude redirige le gaz selon un angle, le gaz s'écoulant après redirection dans une nouvelle direction générale d'écoulement dans la conduite en question. L'angle entre ladite nouvelle direction générale d'écoulement et la direction générale d'écoulement en amont de la redirection est inférieur à 90°. Chacun des coudes du module 1 est, en tant que tel, configuré pour rediriger le gaz selon un angle inférieur à 90°, entre une direction d'écoulement du gaz immédiatement en amont dudit coude et une direction d'écoulement du gaz immédiatement en aval dudit coude. Rediriger le gaz selon un angle suffisamment faible (inférieur à 90°) limite les pertes de charge. Dans le mode de réalisation représenté, les coudes sont configurés pour rediriger le gaz selon un angle environ égal à 45° ce qui limite encore davantage les pertes de charge.

La figure 2 montre un exemple de bifurcation 6 permettant une redirection du gaz dans le module 1 selon l'invention. L'angle AX entre la direction générale d'écoulement 19 du gaz en amont de la redirection (et en amont de la bifurcation 6) et la direction générale d'écoulement 20 du gaz en aval de la redirection (et en aval de la bifurcation 6) est strictement inférieur à 90°. L'angle de redirection dans le sens de circulation du gaz est donc l'angle selon lequel le gaz en aval de la redirection a été dévié de sa direction générale d'écoulement initiale en amont de la redirection.

Le module 1 (parfois appelé skid en anglais) comprend l'ensemble d'équipements dont en particulier, l'ensemble de conduites, les obturateurs (vannes par exemple), le tout permettant la distribution et la commutation des différents flux de gaz vers les adsorbeurs ou provenant des adsorbeurs, vers les collecteurs ou provenant des collecteurs, au cours du fonctionnement d'une unité 2 de séparation ou purification par adsorption.

Un collecteur est canalisation qui raccorde fluidiquement différents équipements et qui est agencée pour recevoir de ceux-ci ou distribuer vers ces derniers divers fluides. Lesdits équipements peuvent être des unités de traitement de fluides (filtre, adsorbeur, machine...) ou d'autres canalisations ou conduites. Dans le contexte de la demande, les fluides en circulation pouvant être sous pression, voire sous vide, il s'agira généralement de tuyaux de section circulaire, éventuellement en polymères (PVC, PER...) mais préférentiellement métalliques (acier carbone, inox, alliages d'aluminium...). Ces collecteurs sont généralement différenciés selon leur fonction: collecteur d'alimentation, d'évacuation, de production, de gaz de régénération ou élution, etc. Mais il convient de noter qu'un même collecteur peut avoir 2 fonctions ou plus, les fluides circulant éventuellement en sens inverse selon le cas.

Dans le mode de réalisation de la figure 1, chacun des angles A1, A2, A3, A4, A5, A6, A7 et A8 est sensiblement égal à 45°, aux écarts de mesure et tolérances prêt. L'invention s'étend cependant au-delà de ce mode de réalisation.

Dans le mode de réalisation représenté, la somme de l'angle A1 et de l'angle A5 est égale à 90°, la somme de l'angle A2 et de l'angle A7 est égale à 90°, la somme de l'angle A6 et de l'angle A3 est égale à 90° et la somme de l'angle A8 et de l'angle A4 est égale à 90°.

Dans le mode de réalisation décrit, la première voie 15 comprend un seul coude de redirection du gaz d'alimentation selon l'angle A1 et un seul coude de redirection du gaz d'alimentation selon l'angle A5, la deuxième voie 16 comprend un seul coude de redirection du gaz d'alimentation selon l'angle A2 et un seul coude de redirection du gaz d'alimentation selon l'angle A7, la troisième voie 17 comprend un seul coude de redirection du gaz évacué selon l'angle A6 et un seul coude de redirection du gaz évacué selon l'angle A3 et la quatrième voie 18 comprend un seul coude de redirection du gaz évacué selon l'angle A8 et un seul coude de redirection du gaz évacué selon l'angle A4. Le coude de redirection selon l'angle A1 et le coude de redirection selon l'angle A2 sont disposés sur la bifurcation 6, le coude de redirection selon l'angle A3 et le coude de redirection selon l'angle A4 sont disposés sur la jonction 11, le coude de redirection selon l'angle A5 et le coude de redirection selon l'angle A6 sont disposés sur le premier raccord 13 et/ou le coude de redirection selon l'angle A7 et le coude de redirection selon l'angle A8 sont disposés sur le deuxième raccord 14. L'invention s'étend cependant au-delà de ce qui est représenté à la figure 1.

Ainsi, dans un mode de réalisation non-représenté :

- la première voie 15 comprend au moins trois coudes, deux coudes parmi lesdits au moins trois coudes étant ensemble configurés pour rediriger le gaz d'alimentation selon l'angle A1 ou deux coudes parmi lesdits au moins trois coudes étant ensemble configurés pour rediriger le gaz d'alimentation selon l'angle A5,
- la deuxième voie 16 comprend au moins trois coudes, deux coudes parmi lesdits au moins trois coudes étant ensemble configurés pour rediriger le gaz d'alimentation selon l'angle A2 ou deux coudes parmi lesdits au moins trois coudes étant ensemble configurés pour rediriger le gaz d'alimentation selon l'angle A7,
- la troisième voie 17 comprend au moins trois coudes, deux coudes parmi lesdits au moins trois coudes étant ensemble configurés pour rediriger le gaz évacué selon l'angle A6 ou deux coudes parmi lesdits au moins trois coudes étant ensemble configurés pour rediriger le gaz évacué selon l'angle A3,
- la quatrième voie 18 comprend au moins trois coudes, deux coudes parmi lesdits au moins trois coudes étant ensemble configurés pour rediriger le gaz évacué selon l'angle A8 ou deux coudes parmi lesdits au moins trois coudes étant ensemble configurés pour rediriger le gaz évacué selon l'angle A4.

Chacune des premières, deuxième, troisième et quatrième voies peut comprendre une pluralité de coudes. Les coudes de chacune des voies pris ensemble font en sorte que le gaz circulant soit redirigé selon les angles maximum au sens de l'invention, respectivement A1, A2, A3, A4, A5, A6, A7 et A8.

Le module 1 des figures 1 et 4 présente une première symétrie par rapport à un premier plan de symétrie, passant par la bifurcation 6 et la jonction 11. Ainsi, les voies d'alimentation du premier adsorbeur 3a et du deuxième adsorbeur 3b permettent une alimentation desdits adsorbeurs selon des trajets identiques. L'alimentation des adsorbeurs se fait donc de manière équilibrée d'un point de vue fluidique. Cela permet de diminuer le recours à des moyens de régulation des débit des gaz circulants, pour équilibrer l'alimentation des adsorbeurs en gaz et est avantageux en termes de pertes de charges. De même, les voies d'évacuation du premier adsorbeur 3a et du deuxième adsorbeur 3b permettent une évacuation desdits adsorbeurs selon des trajets identiques. Il peut être avantageux de configurer les voies d'évacuation de manière symétrique entre elles mais avec des coudes générant moins de pertes de charges que les coudes des voies d'alimentation, les angles restant tous inférieurs à 90°. La basse pression pouvant jouer substantiellement sur les performances de séparation de l'unité, cela offre une flexibilité utile par exemple lorsqu'une pompe est utilisée pour l'évacuation. En particulier, la conduite d'alimentation 5 et la conduite d'évacuation 12 s'étendent dans le premier plan. En particulier, le premier obturateur 21 est disposé dans le module 1 symétriquement par rapport au deuxième obturateur 22 et le troisième obturateur 23 est disposé dans le module 1 symétriquement par rapport au quatrième obturateur 24. Les relations suivantes sont notamment vérifiées :

- A1 = A2,
- A3 = A4,
- A5 = A7,
- A6 = A8,
- L1 = L2, avec L1 étant la longueur de la première conduite 7 entre la bifurcation 6 et le premier raccord 13 et L2 étant la longueur de la deuxième conduite 8 entre la bifurcation 6 et le deuxième raccord 14 et
- L3 = L4, avec L3 étant la longueur de la troisième conduite 9 entre le premier raccord 13 et la jonction 11 et L4 étant la longueur de la quatrième conduite 10 entre le deuxième raccord 14 et la jonction 11.

Le module 1 des figures 1 et 4 présente également une deuxième symétrie par rapport à un deuxième plan de symétrie passant par le premier raccord 13 et le deuxième raccord 14, le deuxième plan de symétrie étant perpendiculaire au premier plan de symétrie. L'évacuation du premier adsorbeur 3a et du deuxième adsorbeur 3b se fait alors de manière équilibrée d'un point de vue fluidique par rapport à leur alimentation. En particulier, la portion de la première conduite 7 en amont du premier raccord 13 dans le sens de circulation du gaz évacué issu du premier adsorbeur 3a et la portion de la deuxième conduite 8 en amont du deuxième raccord 14 dans le sens de circulation du gaz évacué issu du deuxième adsorbeur 3b s'étendent dans le deuxième plan. En particulier, le premier obturateur 21 est disposé dans le module 1 symétriquement par rapport au troisième obturateur 23 par rapport au deuxième plan et le deuxième obturateur 22 est disposé dans le module 1 symétriquement au quatrième obturateur 24 par rapport au deuxième plan. Les relations suivantes sont notamment vérifiées :

$$A1 = A3,$$

$$A2 = A4,$$

$$A5 = A6,$$

$$A7 = A8$$

et

$$L1 = L3$$

et

$$L2 = L4.$$

Les relations suivantes sont vérifiées : L1 = L2 = L3 = L4 et A1 = A2 = A3 = A4 = A5 = A6 = A7 = A8.

Dans l'espace, la conduite d'alimentation 5, la première conduite 7, la deuxième conduite 8, la troisième conduite 9, la quatrième conduite 10 et la conduite d'évacuation 12 s'étendent dans un même plan d'extension. Ainsi, les angles de redirection de la circulation du gaz sont limités dans la direction Z et les pertes de charges sont réduites encore davantage. Le plan d'extension est perpendiculaire au premier plan de symétrie et au deuxième plan de symétrie. Dans le mode de réalisation de la figure 4, la section des conduites est circulaire. Typiquement, le module 1 est dimensionné de la façon suivante :

- le diamètre interne des conduites est compris entre 6" et 48" (entre 0,15 et 1,22 mètres), de préférence entre 8" et 40" entre (entre 0,2 et 1,02 mètres).

-

$$D \leq L1 \leq 10 \times D$$

-

$$D \leq L2 \leq 10 \times D$$

-

$$D \leq L3 \leq 10 \times D$$

-

$$D \leq L4 \leq 10 \times D$$

avec D le diamètre équivalent hydraulique des conduites. Dans le mode de réalisation de la figure 4 dans lequel la section des conduites est circulaire, le diamètre équivalent hydraulique de la conduite est le diamètre interne de la conduite.
- et Rc/Dc est compris entre 0,05 et 5, en particulier est compris entre 0,05 et 2,5, en particulier est compris entre 0,5 et 1,5

avec Dc le diamètre équivalent hydraulique des conduites dans leurs portions coudées et Rc le rayon de courbure desdits coude au centre des conduites. C'est le rayon du cercle tangent à la courbe que suis la conduite en son centre. Le centre des conduites correspond, en chaque point des conduites sur leur longueur, au centre de la section des conduites en ce point. Dans le mode de réalisation de la figure 4 dans lequel la section des conduites est circulaire, le diamètre équivalent hydraulique des conduites au niveau des coudes correspond à leur diamètre interne. En outre, le diamètre interne des conduites étant sensiblement le même sur leur longueur, Dc est égal à D. Il existe donc plusieurs types de coudes. En premier lieu, on distingue entre coude brusque avec un rayon de courbure égal à 0 et coude progressif avec un rayon de courbure non nul. Dans un mode de réalisation similaire à la figure 4 avec un rayon de courbure nul pour chacun des coudes, une telle géométrie pour la bifurcation 6, la jonction 11 et/ou les raccords est dite géométrie en Y (raccord, bifurcation ou jonction en Y). Il est à noter que la bifurcation 6, la jonction 11 et/ou les raccords peuvent avoir entre eux une géométrie différente.

Dans un mode de réalisation où chacune des conduites est essentiellement rectiligne, l'ensemble des première, deuxième, troisième et quatrième conduites définit un quadrilatère convexe, par exemple un rectangle, un carré, un parallélogramme ou un losange. Ledit quadrilatère a pour sommets la bifurcation 6, la jonction 11, le premier raccord 13 13 et le deuxième raccord 14 14. Dans ce cas, la somme des angles A1 à A8 est égale à 360°. Un losange comprend par exemple une bifurcation en Y, une jonction en Y et deux raccords en Y, la géométrie en Y de la bifurcation et de la jonction étant différente de la géométrie en Y des raccords. Dans ce cas, les relations suivantes sont vérifiées :

- A1 = A2 = A3 = A4 et
- A5 = A6 = A7 = A8.

Dans un autre exemple où la géométrie en Y de la bifurcation est différente de la géométrie en Y de la jonction, l'ensemble des conduites forme une géométrie dite en cerf-volant. Lorsque les première, deuxième, troisième et quatrième conduites forment ensemble un carré, chacun des angles A1, A2, A3, A4, A5, A6, A7 et A8 est sensiblement égal à 45°, aux écarts de mesure et tolérances prêt.

Dans le mode de réalisation de la figure 4, les coudes ont un rayon de courbure non-nul. Une telle géométrie pour la bifurcation 6, la jonction 11 et/ou les raccords est dite géométrie en queue d'hirondelle (swallowtail en anglais). Les pertes de charge s'en trouvent d'avantage optimisées.

Les obturateurs (ou moyens d'obturation) sont configurés pour autoriser, interdire ou réguler la circulation du gaz dans la conduite respective. Les obturateurs sont typiquement des vannes d'arrêt, des vannes Tout ou Rien (TOR) par exemple. Alternativement, les obturateurs sont des vannes proportionnelles, telles que des vannes papillons, configurées pour réguler le débit de circulation dans la voie respective. Les vannes proportionnelles permettent de régler plus précisément le débit. Dans un mode de réalisation particulier, les obturateurs sont configurés pour laisser la section maximale de circulation de la conduite libre pour la circulation du gaz lorsqu'ils sont en position ouverte. Les pertes de charges sont ainsi davantage limitées. Chaque obturateur est disposé entre deux portions de la première, de la deuxième, de la troisième ou de la quatrième conduite 10. Ainsi, le module 1 de la figure 4 comprend :

- une bride de fixation et connexion fluidique de la première conduite 7 à l'entrée 21a du premier obturateur 21 et une bride de fixation et connexion fluidique de la première conduite 7 à la sortie 21b du premier obturateur 21,
- une bride de fixation et connexion fluidique de la deuxième conduite 8 à l'entrée 22a du deuxième obturateur 22 et une bride de fixation et connexion fluidique de la deuxième conduite 8 à la sortie 22b du deuxième obturateur 22,
- une bride de fixation et connexion fluidique de la troisième conduite 9 à l'entrée 23a du troisième obturateur 23 et une bride de fixation et connexion fluidique de la troisième conduite 9 à la sortie 23b du troisième obturateur 23 et
- une bride de fixation et connexion fluidique de la quatrième conduite 10 à l'entrée 24a du quatrième obturateur 24 et une bride de fixation et connexion fluidique de la quatrième conduite 10 à la sortie 24b du quatrième obturateur 24.

L'ensemble des conduites du module 1 de la figure 4 comprend une pluralité de tube de circulation des gaz liés entre eux fluidiquement. Une liaison fluidique entre deux desdits tubes est par exemple configurée pour relier de façon étanche lesdits deux tubes et assurer un degré de liberté sur la position desdits deux tubes l'un par rapport à l'autre. La jonction 11 fluidique est par exemple une bride à épaulement de soudure ou une collerette à emboîtement. Une telle liaison fluidique permet une plus grande tolérance lors de l'installation du module 1 dans une unité 2 de séparation ou purification par adsorption et permet de limiter les contraintes mécaniques sur le montage final. Un tube de circulation est par exemple raccordé à l'entrée ou la sortie de l'un des obturateurs, par l'une des brides de fixation et connexion fluidique du module 1.

Dans un mode de réalisation d'un skid, le module 1 comprend une structure support, l'ensemble des conduites étant monté sur ladite structure support, le module 1 comprenant des moyens de manutention fixés à la structure support. Les moyens de manutention peuvent être entre la structure support et le sol, des moyens de préhension ou des moyens de fixation à un engin de manutention. Le module 1 peut alors être transporté sur site pour être raccordé à des équipement de grande taille tels des réservoirs (par exemple des adsorbeurs), des machines ou à des collecteurs d'alimentation ou d'évacuation.

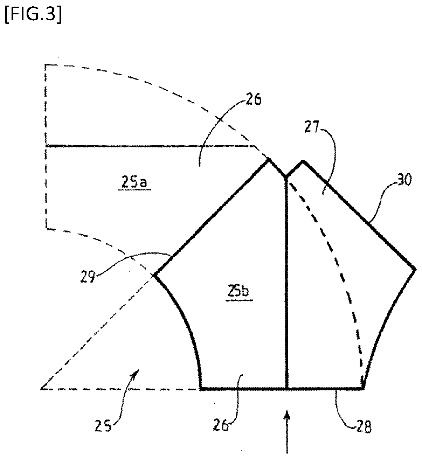

La figure 3 montre un exemple de fabrication à partir d'un coude à 90° d'une bifurcation 6, d'une jonction 11 ou d'un raccord d'une des voies, pour le module 1 selon l'invention. Un tube coudé 25 à 90° est d'abord coupé en deux tubes coudés 25a ; 25b à 45°, le tube coudé 25 en traits fins et le coudé en traits gras. Chacun des tubes coudés 25a ; 25b à 45° est coupé selon un plan perpendiculaire au plan de l'une de leur section d'entrée, perpendiculaire au plan de la courbure du coude en question et passant le centre de ladite section. Deux parties principales référencées 26 et 27 sont ainsi obtenues. Les deux parties principales 26 et 27 sont accolées et soudées pour donner la bifurcation 6, la jonction 11 ou le raccord. Ainsi, par exemple, le gaz peut entrer via la section d'entrée 28 et ressortir par les sections 29 ou 30 suivant la position des équipements d'obturation. Une telle méthode de fabrication se révèle bon marché.

Le module 1 peut être monté dans une unité 2 de séparation ou purification par adsorption comprenant au moins un couple d'un premier adsorbeur 3a et d'un deuxième adsorbeur 3b, au moins deux collecteurs dont un collecteur 4a de gaz d'alimentation et un collecteur 4b de gaz évacué et le module 1 de la figure 4. Dans ce cas :

- le collecteur 4a de gaz d'alimentation est connecté fluidiquement à la conduite d'alimentation 5,
- le collecteur 4b de gaz évacué est connecté fluidiquement à la conduite d'évacuation 12,
- le premier adsorbeur 3a est connecté fluidiquement à la première conduite 7,
- le deuxième adsorbeur 3b est connecté fluidiquement à la deuxième conduite 8.

Les adsorbeurs comprennent par exemple des grappes de modules d'adsorption, les modules d'adsorption opérant en parallèle, ce qui veut dire que chacun des modules d'adsorption d'une même grappe subit la même étape du cycle de pression ou de température de l'unité 2 de séparation ou purification par adsorption que les autres modules d'adsorption de ladite grappe. Le module de distribution et commutation est alors connecté à un tronçon de conduite commun des modules d'adsorption.

L'unité 2 de séparation ou purification par adsorption est par exemple une unité modulée en température (unité TSA) ou une unité modulée en pression. En particulier, l'unité 2 est configurée pour produire un flux enrichi en oxygène à partir d'air atmosphérique, la teneur en oxygène de la production étant préférentiellement comprise entre 88 % et 94 % mole, notamment entre 90 % et 93 % mole. Il s'agit par exemple d'une unité VSA ou VPSA dans laquelle une pompe à vide est connectée fluidiquement au collecteur de gaz résiduaire. La pompe à vide est notamment une soufflante à air (air blower en anglais).

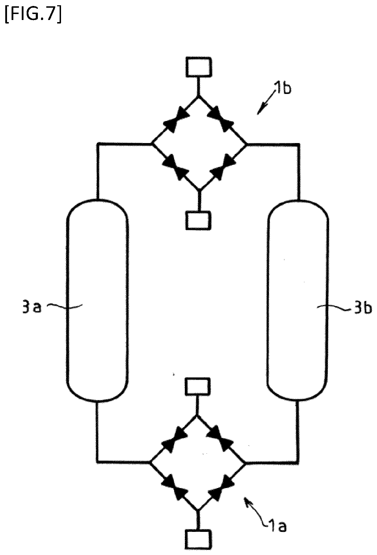

L'unité 2 dans le mode de réalisation particulier de la figure 7 va maintenant être décrite. Le collecteur 4a de gaz d'alimentation est un collecteur d'un gaz de charge, l'unité 2 de séparation ou purification étant configurée pour, lors d'une étape d'adsorption, séparer dans l'un des premier et deuxième adsorbeur 3b ledit gaz de charge en un gaz produit et un gaz résiduaire et le collecteur 4b de gaz évacué est un collecteur dudit gaz résiduaire. L'unité 2 comprend en outre un collecteur d'un gaz de régénération ou élution, pour, suite à l'étape d'adsorption, régénérer le premier ou le deuxième adsorbeur 3b et un collecteur dudit gaz produit (collecteur de gaz produit). Un agencement de modules de distribution et commutation est illustré par référence à un procédé de séparation ou purification dans lequel le gaz produit est produit à la haute pression du cycle. L'unité 2 comprend un premier module 1a et un deuxième module 1b selon l'invention. Ainsi :

- la conduite d'alimentation 5 du deuxième module 1b est connectée fluidiquement au collecteur de gaz de régénération ou élution,
- la conduite d'évacuation 12 du deuxième module 1b est connectée fluidiquement au collecteur du gaz produit,
- la première conduite 7 du deuxième module 1b est connectée fluidiquement au premier adsorbeur 3a,
- la deuxième conduite 8 du deuxième module 1b est connectée fluidiquement au deuxième adsorbeur 3b.

Par référence à un procédé dans lequel le gaz produit est produit à la basse pression du cycle, le collecteur 4a de gaz d'alimentation est un collecteur de gaz de charge et le collecteur 4b de gaz évacué est un collecteur de gaz produit. La conduite d'alimentation du premier module 1a est alors connectée fluidiquement au collecteur de gaz de charge et la conduite d'évacuation du premier module 1a est alors connectée fluidiquement au collecteur de gaz produit. En outre, l'unité comprend un collecteur du gaz résiduaire et un collecteur de gaz de régénération ou élution. La conduite d'évacuation 12 du deuxième module 1b est alors connectée fluidiquement au collecteur de gaz résiduaire et la conduite d'alimentation du deuxième module est connectée fluidiquement au collecteur de gaz de régénération ou élution. Néanmoins, une telle illustration par référence à un procédé dans lequel le gaz produit est produit à la basse pression du cycle ou par référence à un procédé dans lequel le gaz produit est produit à la haute pression du cycle ne change rien à l'agencement dans l'unité du premier et du deuxième module de distribution et commutation.

Comme visible sur la figure 7 le premier adsorbeur 3a de type cylindrique comprend une première extrémité et une deuxième extrémité opposée à la première extrémité. Le deuxième adsorbeur 3b de type cylindrique comprend une troisième extrémité située au niveau de la première extrémité. Le deuxième adsorbeur 3b comprend une quatrième extrémité opposée à la troisième extrémité et située au niveau de la deuxième extrémité. Le premier module 1a est agencé dans l'unité 2 entre le premier et le deuxième adsorbeur 3b, au niveau de la première et de la troisième extrémité, tandis que le deuxième module 1b est agencé dans l'unité 2 entre le premier et le deuxième adsorbeur 3b, au niveau de la deuxième et de la quatrième extrémité.

L'unité 2 de la figure 7 en fonctionnement, alimentée en gaz de charge, peut mettre en œuvre un procédé de distribution et commutation pour la séparation ou purification par adsorption d'un gaz de charge.

Le premier procédé comprend une première étape représentée à la figure 5, la première étape comprenant les sous-étapes suivantes :

- ouverture du premier obturateur 21 et du quatrième obturateur 24,
- fermeture du deuxième obturateur 22 et du troisième obturateur 23,
- circulation du gaz de charge dans le collecteur de gaz de charge et dans la première voie 15,
- redirection du gaz de charge circulant vers le premier obturateur 21 selon l'angle A1,
- circulation du gaz de charge à travers le premier obturateur 21,
- redirection du gaz de charge circulant vers le premier adsorbeur 3a selon l'angle A5,
- alimentation du premier adsorbeur 3a en gaz de charge,
- séparation dans le premier adsorbeur 3a du gaz de charge en un premier gaz résiduaire adsorbé et un premier gaz produit,
- régénération ou élution du deuxième adsorbeur 3b et désorption d'un deuxième gaz résiduaire adsorbé dans le deuxième adsorbeur 3b,
- circulation du deuxième gaz résiduaire dans la quatrième voie 18,
- redirection du deuxième gaz résiduaire circulant vers le quatrième obturateur 24 selon l'angle A8,
- circulation du deuxième gaz résiduaire à travers le quatrième obturateur 24,
- redirection du deuxième gaz résiduaire circulant vers le collecteur de gaz résiduaire selon un l'angle A4.

Durant la première étape, le deuxième obturateur 22 fermé empêche le gaz de charge de circuler dans la deuxième conduite 8 et d'être redirigé vers le deuxième adsorbeur 3b dans la bifurcation 6. Le troisième obturateur 23 fermé empêche le deuxième gaz résiduaire de circuler dans la troisième conduite 9 et d'être redirigé vers le premier adsorbeur 3a.

Le premier procédé comprend en outre une deuxième étape représentée à la figure 6, la deuxième étape comprenant les sous-étapes suivantes:

- ouverture du deuxième et du troisième obturateur 23,
- fermeture du premier et du quatrième obturateur 24,
- circulation du gaz de charge dans le collecteur de gaz de charge et dans la deuxième voie 16,
- redirection du gaz de charge circulant vers le deuxième obturateur 22 selon l'angle A2,

- circulation du gaz de charge à travers le deuxième obturateur 22,
- redirection du gaz de charge circulant vers le deuxième adsorbeur 3b selon l'angle A7,
- alimentation en gaz de charge du deuxième adsorbeur 3b régénéré lors de la première étape,
- séparation dans le deuxième adsorbeur 3b du gaz de charge en le deuxième gaz résiduaire adsorbé et un deuxième gaz produit,
- régénération ou élution du premier adsorbeur 3a et désorption du premier gaz résiduaire adsorbé dans le premier adsorbeur 3a lors de la première étape,
- circulation du premier gaz résiduaire dans la troisième voie 17,
- redirection du premier gaz résiduaire circulant vers le troisième obturateur 23 selon l'angle A6,
- circulation du premier gaz résiduaire à travers le troisième obturateur 23,
- redirection du premier gaz résiduaire circulant vers le collecteur de gaz résiduaire selon l'angle A3.

Durant la deuxième étape, le premier obturateur 21 fermé empêche le gaz de charge de circuler dans la première conduite 7 et d'être redirigé vers le premier adsorbeur 3a dans la bifurcation 6 et le quatrième obturateur 24 fermé empêche le premier gaz résiduaire d'être redirigé vers le deuxième adsorbeur 3b.

L'unité 2 de la figure 7 alimentée en gaz de charge et en un gaz de régénération ou élution et/ou l'unité 2 produisant ledit gaz de régénération ou élution peut, en fonctionnement, mettre en œuvre un deuxième procédé de distribution et commutation pour la séparation ou purification par adsorption d'un gaz de charge.

Le deuxième procédé comprend une première étape, également représentée à la figure 5, la première étape comprenant les sous-étapes suivantes :

- ouverture du premier obturateur 21 et du quatrième obturateur 24,
- fermeture du deuxième obturateur 22 et du troisième obturateur 23,
- circulation du gaz de régénération ou élution dans le collecteur de gaz de régénération ou élution et dans la première voie 15,

- redirection du gaz de régénération ou élution circulant vers le premier obturateur 21 selon l'angle A1,
- circulation du gaz de régénération ou élution à travers le premier obturateur 21,
- redirection du gaz de régénération ou élution circulant vers le premier adsorbeur 3a selon l'angle A5,
- alimentation du premier adsorbeur 3a en gaz de régénération ou élution,
- régénération ou élution du premier adsorbeur 3a,
- séparation du gaz de charge dans le deuxième adsorbeur 3b en un deuxième gaz résiduaire adsorbé et un deuxième gaz produit,
- circulation du deuxième gaz produit dans la quatrième voie 18,

- redirection du deuxième gaz produit circulant vers le quatrième obturateur 24 selon l'angle A8,
- circulation du deuxième gaz produit à travers le quatrième obturateur 24,
- redirection du deuxième gaz produit circulant vers le collecteur de gaz produit selon l'angle A4.

Durant la première étape, le deuxième obturateur 22 fermé empêche le gaz de régénération ou élution de circuler dans la deuxième conduite 8 et d'être redirigé vers le deuxième adsorbeur 3b dans la bifurcation 6 et le troisième obturateur 23 fermé empêche le deuxième gaz produit de circuler dans la troisième conduite 9 et d'être redirigé vers le premier adsorbeur 3a.

Le deuxième procédé comprend une deuxième étape, également représentée à la figure 6, la deuxième étape comprenant les sous-étapes suivantes :

- ouverture du deuxième et du troisième obturateur 23,
- fermeture du premier et du quatrième obturateur 24,
- circulation du gaz de régénération ou élution dans le collecteur de gaz de régénération ou élution et dans la deuxième voie 16,
- redirection du gaz de régénération ou élution circulant vers le deuxième obturateur 22 selon l'angle A2,
- circulation du gaz de régénération ou élution à travers le deuxième obturateur 22,
- redirection du gaz de régénération ou élution circulant vers le deuxième adsorbeur 3b selon l'angle A7,
- alimentation du deuxième adsorbeur 3b en gaz de régénération ou élution,
- régénération ou élution du deuxième adsorbeur 3b,
- séparation dans le premier adsorbeur 3a régénéré durant la première étape du gaz de charge en un premier gaz résiduaire adsorbé et un premier gaz produit
- circulation du premier gaz produit dans la troisième voie 17,
- redirection du premier gaz produit circulant vers le troisième obturateur 23 selon l'angle A6,
- circulation du premier gaz produit à travers le troisième obturateur 23,
- redirection du premier gaz produit circulant vers le collecteur de gaz produit selon l'angle A3.

Durant la deuxième étape, le premier obturateur 21 fermé empêche le gaz de régénération ou élution de circuler dans la première conduite 7 et d'être redirigé vers le premier adsorbeur 3a et le quatrième obturateur 24 fermé empêche le premier gaz produit de circuler dans la quatrième conduite 10 et d'être redirigé vers le deuxième adsorbeur 3b.

L'unité 2 de la figure 7 peut mettre en œuvre une étape d'équilibrage (non-représentée) durant laquelle le premier, le deuxième, le troisième et le quatrième obturateur 24 du premier module 1a et du deuxième module 1b sont fermés, isolant ainsi complètement le premier et le deuxième adsorbeur 3b des différents collecteurs. Ladite étape d'équilibrage peut se faire grâce à une conduite d'équilibrage non-comprise dans le module, conduite d'équilibrage comprenant une première extrémité reliée à la première conduite et une deuxième extrémité reliée à la deuxième conduite.

En particulier, le premier et le deuxième procédé de commutation et distribution peuvent avoir lieu simultanément, la première étape du premier procédé ayant lieu durant la deuxième étape du deuxième procédé, la deuxième étape du premier procédé ayant lieu durant la première étape du deuxième procédé.

Mis en œuvre dans l'unité 2 de séparation ou purification par adsorption, le module 1 ; 1a ; 1b selon l'invention permet une commutation entre la première et la deuxième étape tout en présentant un bon compromis entre la limitation des pertes de charge, les volumes morts et les contraintes mécaniques. La première et la deuxième étape d'un même procédé de distribution et commutation sont des étapes d'un cycle d'adsorption, décalées dans le temps d'un temps de phase.

**Revendications**

1. Module pour une unité (2) de séparation ou purification par adsorption, le module (1) étant configuré pour la distribution et la commutation d'un gaz entre un premier adsorbeur (3a), un deuxième adsorbeur (3b), un collecteur (4a) de gaz d'alimentation et un collecteur (4b) de gaz évacué de ladite unité (2), le module (1) comprenant :

   - une conduite d'alimentation (5) configurée pour être raccordée fluidiquement au collecteur (4a) de gaz d'alimentation, la conduite d'alimentation (5) bifurquant au niveau d'une bifurcation (6) en une première conduite (7) configurée pour être raccordée fluidiquement au premier adsorbeur (3a) et une deuxième conduite (8) configurée pour être raccordée fluidiquement au deuxième adsorbeur (3b),
   - une troisième conduite (9) et une quatrième conduite (10) et une jonction (11) de la troisième conduite (9) et de la quatrième conduite (10) en une conduite d'évacuation (12) configurée pour être raccordée fluidiquement au collecteur (4b) de gaz évacué,
   - un premier raccord (13) entre la première et la troisième conduite (9),
   - un deuxième raccord (14) entre la deuxième et la quatrième conduite (10),
   la conduite d'alimentation (5) ensemble avec la première conduite (7) formant une première voie (15) d'alimentation du premier adsorbeur (3a) en gaz d'alimentation issu du collecteur (4a) de gaz d'alimentation,

la conduite d'alimentation (5) ensemble avec la deuxième conduite (8) formant une deuxième voie (16) d'alimentation du deuxième adsorbeur (3b) en gaz d'alimentation issu du collecteur (4a) de gaz d'alimentation,

une portion de la première conduite (7) ensemble avec la troisième conduite (9) et la conduite d'évacuation (12) formant une troisième voie (17) d'évacuation du gaz évacué du premier adsorbeur (3a) vers le collecteur (4b) de gaz évacué,

une portion de la deuxième conduite (8) ensemble avec la quatrième conduite (10) et la conduite d'évacuation (12) formant une quatrième voie (18) d'évacuation du gaz évacué du deuxième adsorbeur (3b) vers le collecteur (4b) de gaz évacué,

le module (1) comprenant :

- un premier obturateur (21) disposé entre la bifurcation (6) et le premier raccord (13), le premier obturateur (21) étant configuré pour autoriser ou interdire la circulation du gaz dans la première voie (15), - un deuxième obturateur (22) disposé entre la bifurcation (6) et le deuxième raccord (14), le deuxième obturateur (22) étant configuré pour autoriser ou interdire la circulation du gaz dans la deuxième voie (16),
- un troisième obturateur (23) disposé entre le premier raccord (13) et la jonction (11), le troisième obturateur (23) étant configuré pour autoriser ou interdire la circulation du gaz dans la troisième voie (17),
- un quatrième obturateur (24) disposé entre le deuxième raccord (14) et la jonction (11), le quatrième obturateur (24) étant configuré pour autoriser ou interdire la circulation du gaz dans la quatrième voie (18),

chaque obturateur comprenant, dans le sens de circulation dans sa voie respective, une entrée (21a ; 22a ; 23a ; 24a) et une sortie (21b ; 22b ; 23b ; 24b),

module (1) dans lequel :

- la première voie (15) comprend au moins un coude de redirection du gaz d'alimentation vers le premier obturateur (21) selon un angle A1 entre une direction d'écoulement dudit gaz d'alimentation en entrée de la bifurcation (6) et une direction d'écoulement dudit gaz d'alimentation à l'entrée (21a) du premier obturateur (21) et comprend au moins un coude de redirection du gaz d'alimentation vers le premier adsorbeur (3a) selon un angle A5 entre une direction d'écoulement dudit gaz d'alimentation à la sortie (21b) du premier obturateur (21) et une direction d'écoulement dudit gaz d'alimentation en sortie du premier raccord (13),

- la deuxième voie (16) comprend au moins un coude de redirection du gaz d'alimentation vers le deuxième obturateur (22) selon un angle A2 entre une direction d'écoulement dudit gaz d'alimentation en entrée de la bifurcation (6) et une direction d'écoulement dudit gaz d'alimentation à l'entrée (22a) du deuxième obturateur (22) et comprend au moins un coude de redirection du gaz d'alimentation vers le deuxième adsorbeur (3b) selon un angle A7 entre une direction d'écoulement dudit gaz d'alimentation à la sortie (22b) du deuxième obturateur (22) et une direction d'écoulement dudit gaz d'alimentation en sortie du deuxième raccord (14),

- la troisième voie (17) comprend au moins un coude de redirection du gaz évacué du premier adsorbeur (3a) vers le troisième obturateur (23) selon un angle A6 entre une direction d'écoulement dudit gaz évacué en entrée du premier raccord (13) et une direction d'écoulement dudit gaz évacué à l'entrée (23a) du troisième obturateur (23) et comprend au moins un coude de redirection du gaz évacué du premier adsorbeur (3a) vers le collecteur (4b) de gaz évacué selon un angle A3 entre une direction d'écoulement dudit gaz évacué à la sortie (23b) du troisième obturateur (23) et une direction d'écoulement dudit gaz évacué en sortie de la jonction (11),

- la quatrième voie (18) comprend au moins un coude de redirection du gaz évacué du deuxième adsorbeur (3b) vers le quatrième obturateur (24) selon un angle A8 entre une direction d'écoulement dudit gaz évacué en entrée du deuxième raccord (14) et une direction d'écoulement dudit gaz évacué à l'entrée (24a) du quatrième obturateur (24) et comprend au moins un coude de redirection du gaz évacué du deuxième adsorbeur (3b) vers le collecteur (4b) de gaz évacué selon un angle A4 entre une direction d'écoulement dudit gaz évacué à la sortie (24b) du quatrième obturateur (24) et une direction d'écoulement dudit gaz évacué en sortie de la jonction (11),

**caractérisé en ce que** chacun des angles A1, A2, A3, A4, A5, A6, A7 et A8 est inférieur à 90°.

2. Module selon la revendication précédente, dans lequel chacun des angles A1, A2, A3, A4, A5, A6, A7 et A8 est compris entre 20° et 80°.

3. Module selon l'une des revendications précédentes, le module (1) présentant une première symétrie par rapport à un premier plan de symétrie passant par la bifurcation (6) et la jonction (11).

4. Module selon la revendication précédente, le module (1) présentant une deuxième symétrie par rapport à un deuxième plan de symétrie passant par le premier raccord (13) et le deuxième raccord (14), le deuxième plan de symétrie étant perpendiculaire au premier plan de symétrie.

5. Module selon l'une des revendications précédentes, dans lequel l'ensemble des conduites s'étend dans un même plan d'extension.

6. Module selon l'une des revendications précédentes, dans lequel :

   - les conduites formant au moins une des première, deuxième, troisième et quatrième voies ont un diamètre équivalent hydraulique,
   - Dc est le diamètre équivalent hydraulique des conduites au niveau d'au moins un coude d'au moins une des première, deuxième, troisième et quatrième voie,
   - Rc est le rayon de courbure du au moins un coude au centre des conduites,
   - et Rc/Dc est compris entre 0,05 et 5, en particulier entre 0,05 et 2,5, en particulier entre 0,5 et 1,5.

7. Module selon l'une des revendications précédentes, le module (1) comprenant une structure support, l'ensemble des conduites étant monté sur ladite structure support, le module (1) comprenant des moyens de manutention fixés à la structure support.

8. Unité de séparation ou purification par adsorption comprenant au moins un couple d'un premier adsorbeur (3a) et d'un deuxième adsorbeur (3b), au moins deux collecteurs dont un collecteur (4a) de gaz d'alimentation et un collecteur (4b) de gaz évacué, l'unité (2) comprenant le module (1) selon l'une des revendications précédentes, unité (2) dans laquelle :

   - le collecteur (4a) de gaz d'alimentation est connecté fluidiquement à la conduite d'alimentation (5),
   - le collecteur (4b) de gaz évacué est connecté fluidiquement à la conduite d'évacuation (12),
   - le premier adsorbeur (3a) est connecté fluidiquement à la première conduite (7),
   - le deuxième adsorbeur (3b) est connecté fluidiquement à la deuxième conduite (8).

9. Unité selon la revendication précédente, dans laquelle le collecteur (4a) de gaz d'alimentation est un collecteur d'un gaz de charge, l'unité (2) de séparation ou purification étant configurée pour, lors d'une étape d'adsorption, séparer dans l'un des premier et deuxième adsorbeur (3b) ledit gaz de charge en un gaz produit et un gaz résiduaire et le collecteur (4b) de gaz évacué est un collecteur dudit gaz résiduaire.

10. Unité selon la revendication précédente, l'unité (2) comprenant un collecteur d'un gaz de régénération ou élution, pour, suite à l'étape d'adsorption, régénérer le premier ou le deuxième adsorbeur (3b) et un collecteur dudit gaz produit, unité (2) dans laquelle le module (1) est un premier module (1a) et l'unité (2) comprenant un deuxième module (1b) selon l'une des revendications 1 à 7, unité (2) dans laquelle :

    - la conduite d'alimentation (5) du deuxième module (1b) est connectée fluidiquement au collecteur de gaz de régénération ou élution,
    - la conduite d'évacuation (12) du deuxième module (1b) est connectée fluidiquement au collecteur du gaz produit,
    - la première conduite (7) du deuxième module (1b) est connectée fluidiquement au premier adsorbeur (3a),
    - la deuxième conduite (8) du deuxième module (1b) est connectée fluidiquement au deuxième adsorbeur (3b).

11. Unité selon la revendication précédente, dans laquelle le premier adsorbeur (3a) comprend une première extrémité et une deuxième extrémité opposée à la première extrémité, le deuxième adsorbeur (3b) comprend une troisième extrémité située au niveau de la première extrémité, le deuxième adsorbeur (3b) comprenant une quatrième extrémité opposée à la troisième extrémité et située au niveau de la deuxième extrémité, le premier module (1a) étant agencé dans l'unité (2) entre le premier adsorbeur (3a) et le deuxième adsorbeur (3b), au niveau de la première et de la troisième extrémité, le deuxième module (1b) étant agencé dans l'unité (2) entre le premier adsorbeur (3a) et le deuxième adsorbeur (3b), au niveau de la deuxième et de la quatrième extrémité.

12. Unité selon l'une des revendications 8 à 11, l'unité (2) de séparation ou purification par adsorption étant une unité (2) modulée en pression, l'unité (2) étant en particulier configurée pour produire un flux enrichi en oxygène à partir d'air.

13. Procédé de distribution et commutation dans lequel une unité selon l'une des revendications 8 à 12 est alimentée en gaz d'alimentation et de laquelle un gaz évacué est extrait,

le procédé comprenant une première étape, la première étape comprenant les sous-étapes suivantes :

- ouverture du premier obturateur (21) et du quatrième obturateur (24),
- fermeture du deuxième obturateur (22) et du troisième obturateur (23),
- circulation du gaz d'alimentation dans le collecteur (4a) de gaz d'alimentation et dans la première voie (15),
- redirection du gaz d'alimentation vers le premier obturateur (21) selon l'angle A1,
- circulation du gaz d'alimentation à travers le premier obturateur (21),
- redirection du gaz d'alimentation vers le premier adsorbeur (3a) selon l'angle A5,
- alimentation du premier adsorbeur (3a) en gaz d'alimentation,
- extraction du deuxième adsorbeur (3b) du gaz évacué,
- circulation du gaz évacué dans la quatrième voie (18),
- redirection du gaz évacué vers le quatrième obturateur (24) selon l'angle A8,
- circulation du gaz évacué à travers le quatrième obturateur (24),
- redirection du gaz évacué vers le collecteur (4b) de gaz évacué selon un l'angle A4,

le procédé comprenant une deuxième étape, la deuxième étape comprenant les sous-étapes suivantes:

- ouverture du deuxième obturateur (22) et du troisième obturateur (23),
- fermeture du premier obturateur (21) et du quatrième obturateur (24),
- circulation du gaz d'alimentation dans le collecteur (4a) de gaz d'alimentation et dans la deuxième voie,
- redirection du gaz d'alimentation vers le deuxième obturateur (22) selon l'angle A2,
- circulation du gaz d'alimentation à travers le deuxième obturateur (22),
- redirection du gaz d'alimentation vers le deuxième adsorbeur (3b) selon l'angle A7,
- alimentation en gaz d'alimentation du deuxième adsorbeur (3b),
- extraction du premier adsorbeur (3a) du gaz évacué
- circulation du gaz évacué dans la troisième voie,
- redirection du gaz évacué vers le troisième obturateur (23) selon l'angle A6,
- circulation du gaz évacué à travers le troisième obturateur (23),
- redirection du gaz évacué vers le collecteur (4b) de gaz évacué selon l'angle A3.

14. Procédé selon la revendication précédente, mis en œuvre par l'unité selon l'une des revendications 9 à 11 ou selon la revendication 12 prise dans sa dépendance de l'une des revendications 9 à 11, procédé dans lequel le gaz d'alimentation est un gaz de charge et le gaz d'évacuation est un gaz résiduaire,

procédé dans lequel la première étape comprend en outre les étapes suivantes :

- séparation dans le premier adsorbeur (3a) du gaz de charge en un premier gaz résiduaire adsorbé et un premier gaz produit,
- régénération ou élution du deuxième adsorbeur (3b) et désorption d'un deuxième gaz résiduaire adsorbé dans le deuxième adsorbeur (3b),

procédé dans lequel la deuxième étape comprend en outre les étapes suivantes :

- séparation dans le deuxième adsorbeur (3b) régénéré lors de la première étape du gaz de charge en le deuxième gaz résiduaire adsorbé et un deuxième gaz produit,
- régénération ou élution du premier adsorbeur (3a) et désorption du premier gaz résiduaire adsorbé dans le premier adsorbeur (3a) lors de la première étape.

15. Procédé selon la revendication 13, mis en œuvre par l'unité selon la revendication 10 ou 11 ou selon la revendication 12 prise dans sa dépendance de la revendication 10 ou 11, procédé dans lequel le gaz d'alimentation est un gaz de régénération ou élution et le gaz évacué est un gaz produit, l'unité étant alimentée en gaz de charge,

procédé dans lequel la première étape comprend en outre les étapes suivantes :

- régénération ou élution du premier adsorbeur (3a) alimenté en gaz de régénération ou élution et désorption d'un premier gaz résiduaire adsorbé dans le premier adsorbeur,
- séparation du gaz de charge dans le deuxième adsorbeur (3a) en un deuxième gaz résiduaire adsorbé et un deuxième gaz produit,

procédé dans lequel la deuxième étape comprend en outre les étapes suivantes :

- régénération ou élution du deuxième adsorbeur (3b) alimenté en gaz de régénération ou élution et désorption du deuxième gaz résiduaire adsorbé lors de la première étape,

- séparation dans le premier adsorbeur (3a) régénéré durant la première étape du gaz de charge en le premier gaz résiduaire adsorbé et un premier gaz produit.

## Patentansprüche

1. Modul für eine Einheit (2) zur Trennung oder Reinigung durch Adsorption, wobei das Modul (1) für die Verteilung und Umschaltung eines Gases zwischen einem ersten Adsorber (3a), einem zweiten Adsorber (3b), einem Sammelrohr (4a) für Speisegas und einem Sammelrohr (4b) für abgeführtes Gas der Einheit (2) konfiguriert ist, wobei das Modul (1) umfasst :

 - eine Versorgungsleitung (5), die so konfiguriert ist, dass sie mit dem Speisegaskollektor (4a) fluidisch verbunden ist, wobei sich die Versorgungsleitung (5) an einer Verzweigung (6) in eine erste Leitung (7), die so konfiguriert ist, dass sie mit dem ersten Adsorber (3a) fluidisch verbunden ist, und eine zweite Leitung (8), die so konfiguriert ist, dass sie mit dem zweiten Adsorber (3b) fluidisch verbunden ist, verzweigt,
 - eine dritte Leitung (9) und eine vierte Leitung (10) und eine Verbindung (11) der dritten Leitung (9) und der vierten Leitung (10) zu einer Auslassleitung (12), die so konfiguriert ist, dass sie fluidisch mit dem Sammelbehälter (4b) für das ausgeleitete Gas verbunden ist,
 - eine erste Verbindung (13) zwischen der ersten und der dritten Leitung (9),
 - eine zweite Verbindung (14) zwischen der zweiten und der vierten Leitung (10),

 die Versorgungsleitung (5) zusammen mit der ersten Leitung (7) einen ersten Weg (15) zur Versorgung des ersten Adsorbers (3a) mit aus dem Speisegaskollektor (4a) stammendem Speisegas bildet,
 die Versorgungsleitung (5) zusammen mit der zweiten Leitung (8) einen zweiten Weg (16) zur Versorgung des zweiten Adsorbers (3b) mit aus dem Speisegaskollektor (4a) stammendem Speisegas bildet,
 ein Abschnitt der ersten Leitung (7) zusammen mit der dritten Leitung (9) und der Auslassleitung (12) einen dritten Weg (17) zum Auslassen von Auslassgas aus dem ersten Adsorber (3a) in den Auslassgassammler (4b) bildet,
 ein Abschnitt der zweiten Leitung (8) zusammen mit der vierten Leitung (10) und der Abführleitung (12) einen vierten Weg (18) zum Abführen des Abgases aus dem zweiten Adsorber (3b) in den Abgaskollektor (4b) bildet,
das Modul (1) umfasst :

- einen ersten Verschluss (21), der zwischen der Verzweigung (6) und dem ersten Anschluss (13) angeordnet ist, wobei der erste Verschluss (21) so konfiguriert ist, dass er die Zirkulation des Gases in dem ersten Weg (15) zulässt oder unterbindet, - einen zweiten Verschluss (22), der zwischen der Verzweigung (6) und dem zweiten Anschluss (14) angeordnet ist, wobei der zweite Verschluss (22) so konfiguriert ist, dass er die Zirkulation des Gases in dem zweiten Weg (16) zulässt oder unterbindet,
- einen dritten Verschluss (23), der zwischen dem ersten Anschluss (13) und der Verbindung (11) angeordnet ist, wobei der dritte Verschluss (23) so konfiguriert ist, dass er den Gasfluss in den dritten Pfad (17) zulässt oder unterbindet,
- einen vierten Verschluss (24), der zwischen dem zweiten Anschluss (14) und der Verbindung (11) angeordnet ist, wobei der vierte Verschluss (24) so konfiguriert ist, dass er den Gasfluss in den vierten Pfad (18) zulässt oder unterbindet,
wobei jeder Verschluss in der Strömungsrichtung in seinem jeweiligen Weg einen Einlass (21a; 22a; 23a; 24a) und einen Auslass (21b; 22b; 23b; 24b) umfasst, Modul (1), in dem :
- der erste Weg (15) mindestens eine Krümmung zur Umleitung des Speisegases zum ersten Verschluss (21) unter einem Winkel A1 zwischen einer Strömungsrichtung des Speisegases am Eingang der Verzweigung (6) und einer Strömungsrichtung des Speisegases am Eingang (21a) des ersten Verschlusses (21) umfasst, wobei der erste Weg (15) mindestens eine Krümmung zur Umleitung des Speisegases zum ersten Verschluss (21) unter einem Winkel A1 zwischen einer Strömungsrichtung des Speisegases am Eingang der Verzweigung (6) und einer Strömungsrichtung des Speisegases am Eingang (21a) des ersten Verschlusses (21) umfasst. Verschluss (21) und umfasst mindestens einen Krümmer zur Umlenkung des Speisegases zum ersten Adsorber (3a) gemäß einem Winkel A5 zwischen einer Strömungsrichtung des Speisegases am Ausgang (21b) des ersten Verschlusses (21) und einer Strömungsrichtung des Speisegases am Ausgang des ersten Anschlusses (13),
- der zweite Weg (16) mindestens eine Krümmung zur Umleitung des Speisegases zum zweiten Verschluss (22) unter einem Winkel A2 zwischen einer Strömungsrichtung des Speisegases am Eingang der Verzweigung (6) und einer Strömungsrichtung des Speisegases am Eingang (22a) des zweiten Verschlusses umfasst. (22) und umfasst mindestens eine Krümmung zur Umleitung des Speisegases zum zweiten Adsorber (3b) unter einem Winkel A7 zwischen einer Strömungsrichtung des Speisegases am Ausgang (22b) des zweiten Verschlusses (22) und einer Strömungsrichtung des Speisegases am Ausgang des zweiten Anschlusses (14),

- der dritte Weg (17) mindestens eine Krümmung zur Umleitung des aus dem ersten Adsorber (3a) abgeleiteten Gases zum dritten Verschluss (23) unter einem Winkel A6 zwischen einer Strömungsrichtung des abgeleiteten Gases am Eingang des ersten Anschlusses (13) und einer Strömungsrichtung des abgeleiteten Gases am Eingang (23a) des dritten Verschlusses (23) umfasst. Adsorber (3a) zum Sammelbehälter (4b) für evakuiertes Gas gemäß einem Winkel A3 zwischen einer Strömungsrichtung des evakuierten Gases am Ausgang (23b) des dritten Verschlusses (23) und einer Strömungsrichtung des evakuierten Gases am Ausgang der Verbindung (11) und umfasst mindestens einen Krümmer zur Umlenkung des evakuierten Gases vom ersten Adsorber (3a) zum Sammelbehälter (4b) für evakuiertes Gas gemäß einem Winkel A3 zwischen einer Strömungsrichtung des evakuierten Gases am Ausgang (23b) des dritten Verschlusses (23) und einer Strömungsrichtung des evakuierten Gases am Ausgang der Verbindung (11),

- der vierte Weg (18) mindestens eine Umleitungskrümmung des vom zweiten Adsorber (3b) zum vierten Verschluss (24) abgeleiteten Gases in einem Winkel A8 zwischen einer Strömungsrichtung des am Eingang des zweiten Verbindungsstücks (14) abgeleiteten Gases und einer Strömungsrichtung des am Eingang (24a) des vierten Verschlusses abgeleiteten Gases aufweist Verschlusselement (24) und umfasst mindestens einen Krümmer zur Umleitung des aus dem zweiten Adsorber (3b) abgeleiteten Gases zum Sammelbehälter (4b) für abgeleitetes Gas gemäß einem Winkel A4 zwischen einer Strömungsrichtung des abgeleiteten Gases am Ausgang (24b) des vierten Verschlusselements (24) und einer Strömungsrichtung des abgeleiteten Gases am Ausgang der Verbindung (11),

**dadurch gekennzeichnet, dass** jeder der Winkel A1, A2, A3, A4, A5, A6, A7 und A8 kleiner als 90° ist.

2. Modul nach dem vorhergehenden Anspruch, wobei jeder der Winkel A1, A2, A3, A4, A5, A6, A7 und A8 zwischen 20° und 80° liegt.

3. Modul nach einem der vorhergehenden Ansprüche, wobei das Modul (1) eine erste Symmetrie in Bezug auf eine erste Symmetrieebene aufweist, die durch die Verzweigung (6) und die Verbindungsstelle (11) verläuft.

4. Modul nach dem vorherigen Anspruch, wobei das Modul (1) eine zweite Symmetrie in Bezug auf eine zweite Symmetrieebene aufweist, die durch den ersten Anschluss (13) und den zweiten Anschluss (14) verläuft, wobei die zweite Symmetrieebene senkrecht zur ersten Symmetrieebene ist.

5. Modul nach einem der vorhergehenden Ansprüche, wobei sich alle Leitungen in einer einzigen Erstreckungsebene erstrecken.

6. Modul nach einem der vorhergehenden Ansprüche, wobei :

   - die Leitungen, die mindestens einen der ersten, zweiten, dritten und vierten Wege bilden, einen hydraulisch äquivalenten Durchmesser haben,
   - Dc ist der hydraulisch äquivalente Durchmesser der Leitungen an mindestens einer Biegung von mindestens einer der ersten, zweiten, dritten und vierten Fahrspuren,
   - Rc ist der Krümmungsradius der mindestens einen Biegung in der Mitte der Leitungen,
   - und Rc/Dc liegt zwischen 0,05 und 5, insbesondere zwischen 0,05 und 2,5, vor allem zwischen 0,5 und 1,5.

7. Modul nach einem der vorhergehenden Ansprüche, wobei das Modul (1) eine Trägerstruktur umfasst, wobei die Gesamtheit der Leitungen an der Trägerstruktur angebracht ist, wobei das Modul (1) an der Trägerstruktur befestigte Handhabungsmittel umfasst.

8. Adsorptive Trenn- oder Reinigungseinheit mit mindestens einem Paar aus einem ersten Adsorber (3a) und einem zweiten Adsorber (3b), mindestens zwei Sammlern, darunter einem Speisegas-Sammler (4a) und einem Abgas-Sammler (4b), wobei die Einheit (2) das Modul (1) nach einem der vorhergehenden Ansprüche umfasst, wobei in der Einheit (2) :

   - der Zuführgasverteiler (4a) fluidisch mit der Zuführleitung (5) verbunden ist,
   - der Sammelbehälter (4b) für abgeführtes Gas fluidisch mit der Abführleitung (12) verbunden ist,
   - der erste Adsorber (3a) fluidisch mit der ersten Leitung (7) verbunden ist,

- der zweite Adsorber (3b) fluidisch mit der zweiten Leitung (8) verbunden ist.

9. Einheit nach dem vorhergehenden Anspruch, wobei der Speisegassammler (4a) ein Sammler eines Einsatzgases ist, wobei die Trenn- oder Reinigungseinheit (2) so konfiguriert ist, dass sie in einem Adsorptionsschritt in einem der ersten und zweiten Adsorber (3b) das Einsatzgas in ein Produktgas und ein Restgas trennt und der abgeführte Gassammler (4b) ein Sammler des Restgases ist.

10. Einheit nach dem vorhergehenden Anspruch, wobei die Einheit (2) einen Sammler für ein Regenerations- oder Elutionsgas, um im Anschluss an den Adsorptionsschritt den ersten oder zweiten Adsorber (3b) zu regenerieren, und einen Sammler für das erzeugte Gas umfasst,
Einheit (2), in der das Modul (1) ein erstes Modul (1a) ist und die Einheit (2) ein zweites Modul (1b) nach einem der Ansprüche 1 bis 7 umfasst, Einheit (2), in der :

   - die Zuführleitung (5) des zweiten Moduls (1b) fluidisch mit dem Regenerations- oder Elutionsgassammler verbunden ist,
   - die Auslassleitung (12) des zweiten Moduls (1b) fluidisch mit dem Sammler des Produktgases verbunden ist,
   - die erste Leitung (7) des zweiten Moduls (1b) ist fluidisch mit dem ersten Adsorber (3a) verbunden,
   - die zweite Leitung (8) des zweiten Moduls (1b) ist fluidisch mit dem zweiten Adsorber (3b) verbunden.

11. Einheit nach dem vorhergehenden Anspruch, wobei der erste Adsorber (3a) ein erstes Ende und ein dem ersten Ende gegenüberliegendes zweites Ende umfasst, der zweite Adsorber (3b) ein drittes Ende umfasst, das an dem ersten Ende angeordnet ist, und der zweite Adsorber (3b) ein viertes Ende umfasst, das dem dritten Ende gegenüberliegt und an dem zweiten Ende angeordnet ist, wobei das erste Modul (1a) in der Einheit (2) zwischen dem ersten Adsorber (3a) und dem zweiten Adsorber (3b) an dem ersten und dem dritten Ende angeordnet ist, wobei das zweite Modul (1b) in der Einheit (2) zwischen dem ersten Adsorber (3a) und dem zweiten Adsorber (3b) an dem zweiten und dem vierten Ende angeordnet ist.

12. Einheit nach einem der Ansprüche 8 bis 11, wobei die Einheit (2) zur Trennung oder Reinigung durch Adsorption eine Einheit (2) mit Druckmodulation ist, wobei die Einheit (2) insbesondere so konfiguriert ist, dass sie einen mit Sauerstoff angereicherten Strom aus Luft erzeugt.

13. Verfahren zum Verteilen und Schalten, bei dem eine Einheit nach einem der Ansprüche 8 bis 12 mit Speisegas versorgt wird und aus der ein abgeführtes Gas abgezogen wird,

   das Verfahren einen ersten Schritt umfasst, wobei der erste Schritt die folgenden Teilschritte umfasst:

      - Öffnen des ersten Verschlusses (21) und des vierten Verschlusses (24),
      - Schließen des zweiten Verschlusses (22) und des dritten Verschlusses (23),
      - Zirkulation des Speisegases in den Speisegasverteiler (4a) und in den ersten Weg (15),
      - Umlenkung des Speisegases zum ersten Verschluss (21) im Winkel A1,
      - Zirkulation des Speisegases durch den ersten Verschluss (21),
      - Umlenkung des Speisegases zum ersten Adsorber (3a) unter dem Winkel A5,
      - Zuführen von Speisegas zum ersten Adsorber (3a),
      - Abzug des abgeführten Gases aus dem zweiten Adsorber (3b),
      - Umwälzung des abgeführten Gases in den vierten Weg (18),
      - Umlenkung des abgeleiteten Gases zum vierten Verschluss (24) gemäß dem Winkel A8,
      - Zirkulation des abgeleiteten Gases durch den vierten Verschluss (24),
      - Umleiten des Abgases zum Abgasverteiler (4b) unter einem Winkel A4,

   wobei das Verfahren einen zweiten Schritt umfasst, wobei der zweite Schritt die folgenden Unterschritte umfasst:

      - Öffnen des zweiten Verschlusses (22) und des dritten Verschlusses (23),
      - Schließen des ersten Verschlusses (21) und des vierten Verschlusses (24),
      - Zirkulation des Speisegases durch den Speisegasverteiler (4a) und den zweiten Kanal,
      - Umlenkung des Speisegases zum zweiten Verschluss (22) unter dem Winkel A2,
      - Zirkulation des Speisegases durch den zweiten Verschluss (22),
      - Umleitung des Speisegases zum zweiten Adsorber (3b) unter dem Winkel A7,
      - Zuführen von Speisegas zum zweiten Adsorber (3b),
      - Abziehen des abgeleiteten Gases aus dem ersten Adsorber (3a).
      - Umwälzung des abgeleiteten Gases in den dritten Weg,

- Umlenkung des abgeleiteten Gases zum dritten Verschluss (23) gemäß dem Winkel A6,
- Zirkulation des abgeleiteten Gases durch den dritten Verschluss (23),
- Umleitung des Abgases zum Abgasverteiler (4b) unter dem Winkel A3.

14. Verfahren nach dem vorhergehenden Anspruch, durchgeführt von der Einheit nach einem der Ansprüche 9 bis 11 oder nach Anspruch 12 in Abhängigkeit von einem der Ansprüche 9 bis 11, wobei in dem Verfahren das Zufuhrgas ein Einsatzgas ist und das Abfuhrgas ein Restgas ist,

Verfahren, bei dem der erste Schritt zusätzlich die folgenden Schritte umfasst:

- Auftrennen im ersten Adsorber (3a) des Einsatzgases in ein erstes adsorbiertes Restgas und ein erstes Produktgas,
- Regeneration oder Elution des zweiten Adsorbers (3b) und Desorption eines zweiten adsorbierten Restgases im zweiten Adsorber (3b),

Verfahren, bei dem der zweite Schritt ferner die folgenden Schritte umfasst:

- Trennen im zweiten Adsorber (3b), der im ersten Schritt regeneriert wurde, des Einsatzgases in das adsorbierte zweite Abgas und ein zweites Produktgas,
- Regenerieren oder Eluieren des ersten Adsorbers (3a) und Desorbieren des im ersten Schritt im ersten Adsorber (3a) adsorbierten ersten Restgases.

15. Verfahren nach Anspruch 13, durchgeführt von der Einheit nach Anspruch 10 oder 11 oder nach Anspruch 12 in Abhängigkeit von Anspruch 10 oder 11, wobei bei dem Verfahren das zugeführte Gas ein Regenerations- oder Elutionsgas ist und das abgeführte Gas ein Produktgas ist, wobei die Einheit mit Einsatzgas versorgt wird,

Verfahren, bei dem der erste Schritt ferner die folgenden Schritte umfasst:

- Regeneration oder Elution des ersten Adsorbers (3a), dem das Regenerations- oder Elutionsgas zugeführt wird, und Desorption eines ersten Restgases, das in dem ersten Adsorber adsorbiert wurde,
- Auftrennen des Einsatzgases im zweiten Adsorber (3a) in ein adsorbiertes zweites Restgas und ein zweites Produktgas,

Verfahren, bei dem der zweite Schritt ferner die folgenden Schritte umfasst:

- Regeneration oder Elution des zweiten Adsorbers (3b), dem das Regenerationsgas zugeführt wird, oder Elution und Desorption des im ersten Schritt adsorbierten zweiten Restgases,
- Trennung im ersten Adsorber (3a), der während des ersten Schritts regeneriert wurde, des Einsatzgases in das erste adsorbierte Restgas und ein erstes Produktgas.

**Claims**

1. A module for an adsorption separation or purification unit (2), the module (1) being configured for the distribution and switching of a gas between a first adsorber (3a), a second adsorber (3b), a feed gas manifold (4a) and an exhaust gas manifold (4b) of said unit (2), the module (1) comprising :

- a feed line (5) configured to be fluidly connected to the feed gas manifold (4a), the feed line (5) branching at a bifurcation (6) into a first line (7) configured to be fluidly connected to the first adsorber (3a) and a second line (8) configured to be fluidly connected to the second adsorber (3b),
- a third pipe (9) and a fourth pipe (10) and a junction (11) of the third pipe (9) and the fourth pipe (10) into an exhaust pipe (12) configured to be fluidly connected to the exhaust gas manifold (4b),
- a first connection (13) between the first and third lines (9),
- a second connection (14) between the second and fourth pipes (10),
the feed line (5) together with the first line (7) forming a first path (15) for supplying the first adsorber (3a) with feed gas from the feed gas manifold (4a),
the feed line (5) together with the second line (8) forming a second path (16) for supplying the second adsorber (3b) with feed gas from the feed gas manifold (4a),
a portion of the first pipe (7) together with the third pipe (9) and the discharge pipe (12) forming a third path (17) for discharging the discharge gas from the first adsorber (3a) to the discharge gas manifold (4b),
a portion of the second pipe (8) together with the fourth pipe (10) and the discharge pipe (12) forming a fourth path (18) for discharging exhaust gas from the second adsorber (3b) to the exhaust gas collector (4b),

the module (1) comprising :

- a first obturator (21) arranged between the bifurcation (6) and the first connection (13), the first obturator (21) being configured to authorize or prohibit the flow of gas in the first path (15),
- a second obturator (22) arranged between the bifurcation (6) and the second connection (14), the second obturator (22) being configured to authorize or prohibit the flow of gas in the second path (16),
- a third obturator (23) located between the first connection (13) and the junction (11), the third obturator (23) being configured to authorize or prevent gas flow in the third path (17),
- a fourth obturator (24) arranged between the second connection (14) and the junction (11), the fourth obturator (24) being configured to authorize or prevent gas flow in the fourth path (18),

each obturator comprising, in the direction of flow in its respective channel, an inlet (21a; 22a; 23a; 24a) and an outlet (21b; 22b; 23b; 24b),

module (1) in which :

- the first path (15) comprises at least one elbow for redirecting the feed gas towards the first shutter (21) at an angle A1 between a direction of flow of said feed gas at the inlet of the bifurcation (6) and a direction of flow of said feed gas at the inlet (21a) of the first shutter (21), and obturator (21) and comprises at least one elbow for redirecting the feed gas to the first adsorber (3a) at an angle A5 between a flow direction of said feed gas at the outlet (21b) of the first obturator (21) and a flow direction of said feed gas at the outlet of the first connector (13),
- the second path (16) comprises at least one elbow for redirecting the feed gas to the second shutter (22) at an angle A2 between a direction of flow of said feed gas at the inlet of the bifurcation (6) and a direction of flow of said feed gas at the inlet (22a) of the second shutter (22) and comprises at least one elbow for redirecting the feed gas to the second adsorber (3b) at an angle A7 between a flow direction of said feed gas at the outlet (22b) of the second shutter (22) and a flow direction of said feed gas at the outlet of the second connector (14),
- the third path (17) comprises at least one elbow for redirecting the gas discharged from the first adsorber (3a) towards the third shutter (23) at an angle A6 between a direction of flow of said gas discharged at the inlet of the first connector (13) and a direction of flow of said gas discharged at the inlet (23a) of the third shutter obturator (23) and comprises at least one elbow for redirecting the gas discharged from the first adsorber (3a) towards the discharged gas collector (4b) at an angle A3 between a direction of flow of said discharged gas at the outlet (23b) of the third obturator (23) and a direction of flow of said discharged gas at the outlet of the junction (11),
- the fourth path (18) comprises at least one elbow for redirecting the gas discharged from the second adsorber (3b) towards the fourth shutter (24) at an angle A8 between a direction of flow of said gas discharged at the inlet of the second connection (14) and a direction of flow of said gas discharged at the inlet (24a) of the fourth shutter obturator (24) and comprises at least one elbow for redirecting the gas discharged from the second adsorber (3b) towards the discharged gas collector (4b) at an angle A4 between a direction of flow of said discharged gas at the outlet (24b) of the fourth obturator (24) and a direction of flow of said discharged gas at the outlet of the junction (11),

**characterized in that** each of the angles A1, A2, A3, A4, A5, A6, A7 and A8 is less than 90°.

2. Module according to the preceding claim, in which each of the angles A1, A2, A3, A4, A5, A6, A7 and A8 is between 20° and 80°.

3. Module according to one of the preceding claims, the module (1) having a first symmetry with respect to a first plane of symmetry passing through the bifurcation (6) and the junction (11).

4. Module according to the previous claim, whereby the module (1) has a second symmetry with respect to a second plane of symmetry passing through the first connection (13) and the second connection (14), whereby the second plane of symmetry is perpendicular to the first plane of symmetry.

5. Module according to one of the preceding claims, in which all the conduits extend in the same plane of extension.

6. Module according to one of the preceding claims, in which :

- the pipes forming at least one of the first, second, third and fourth lanes have a hydraulic equivalent diameter,
- Dc is the hydraulic equivalent diameter of the pipes at at least one bend of at least one of the first, second, third and fourth lanes,
- Rc is the radius of curvature of at least one bend in the center of the pipes,
- and Rc/Dc is between 0.05 and 5, in particular between 0.05 and 2.5, especially between 0.5 and 1.5.

7. Module according to one of the preceding claims, the module (1) comprising a support structure, the pipe assembly being mounted on said support structure, the module (1) comprising handling means attached to the support structure.

8. Adsorption separation or purification unit comprising at least one pair of a first adsorber (3a) and a second adsorber (3b), at least two manifolds including a feed gas manifold (4a) and an exhaust gas manifold (4b), the unit (2) comprising the module (1) according to one of the preceding claims, in which unit (2) :

   - the feed gas manifold (4a) is fluidly connected to the feed line (5),
   - the exhaust gas manifold (4b) is fluidly connected to the exhaust pipe (12),
   - the first adsorber (3a) is fluidly connected to the first pipe (7),
   - the second adsorber (3b) is fluidly connected to the second pipe (8).

9. A unit according to the preceding claim, wherein the feed gas collector (4a) is a collector of a feed gas, the separation or purification unit (2) being configured to, in an adsorption step, separate said feed gas into a product gas and a waste gas in one of the first and second adsorbers (3b), and the exhaust gas collector (4b) is a collector of said waste gas.

10. A unit according to the preceding claim, the unit (2) comprising a collector of a regeneration or elution gas for, following the adsorption step, regenerating the first or second adsorber (3b) and a collector of said product gas,
   unit (2) in which the module (1) is a first module (1a) and the unit (2) comprises a second module (1b) according to one of claims 1 to 7, unit (2) in which :

   - the feed line (5) of the second module (1b) is fluidly connected to the regeneration or elution gas manifold,
   - the discharge line (12) of the second module (1b) is fluidly connected to the product gas manifold,
   - the first line (7) of the second module (1b) is fluidically connected to the first adsorber (3a),

   - the second line (8) of the second module (1b) is fluidly connected to the second adsorber (3b).

11. Unit according to the preceding claim, in which the first adsorber (3a) comprises a first end and a second end opposite the first end, the second adsorber (3b) comprises a third end located at the first end, the second adsorber (3b) comprising a fourth end opposite the third end and located at the second end, the first module (1a) being arranged in the unit (2) between the first adsorber (3a) and the second adsorber (3b), at the first and third ends, the second module (1b) being arranged in the unit (2) between the first adsorber (3a) and the second adsorber (3b), at the second and fourth ends.

12. Unit according to one of claims 8 to 11, the adsorption separation or purification unit (2) being a pressure-modulated unit (2), the unit (2) being configured in particular to produce an oxygen-enriched stream from air.

13. A distribution and switching process in which a unit according to one of claims 8 to 12 is supplied with feed gas and from which exhaust gas is extracted,

   the method comprising a first step, the first step comprising the following sub-steps :

   - opening the first shutter (21) and the fourth shutter (24),
   - closing the second shutter (22) and the third shutter (23),
   - circulation of feed gas in the feed gas manifold (4a) and in the first channel (15),
   - redirection of feed gas to the first shutter (21) at angle A1,
   - circulation of feed gas through the first obturator (21),
   - redirection of feed gas to the first adsorber (3a) at angle A5,
   - supply of feed gas to the first adsorber (3a),
   - extracting exhaust gas from the second adsorber (3b),
   - circulation of exhaust gas in the fourth channel (18),
   - redirection of exhaust gas to the fourth shutter (24) at angle A8,
   - exhaust gas flows through the fourth shutter (24),
   - redirection of the exhaust gas to the exhaust gas manifold (4b) at angle A4,

   the process comprising a second step, the second step comprising the following sub-steps:

   - opening the second shutter (22) and the third shutter (23),

- closing the first shutter (21) and the fourth shutter (24),
- circulation of feed gas in the feed gas manifold (4a) and in the second channel,
- redirection of feed gas to the second shutter (22) at angle A2,
- circulation of feed gas through the second obturator (22),
- redirection of feed gas to the second adsorber (3b) at angle A7,
- supply of feed gas to the second adsorber (3b),
- extracting exhaust gas from the first adsorber (3a)
- circulation of exhaust gas in the third channel,
- redirection of exhaust gas to the third shutter (23) at angle A6,
- circulation of exhaust gas through the third obturator (23),
- redirection of exhaust gas to the exhaust gas manifold (4b) at angle A3.

14. Process according to the preceding claim, carried out by the unit according to one of claims 9 to 11 or according to claim 12 in its dependence on one of claims 9 to 11, in which process the feed gas is a charge gas and the discharge gas is a waste gas,

    process in which the first step further comprises the following steps :

        - separation in the first adsorber (3a) of the feed gas into a first adsorbed waste gas and a first product gas,
        - regeneration or elution of the second adsorber (3b) and desorption of a second adsorbed waste gas in the second adsorber (3b),

    wherein the second step further comprises the following steps :

        - separation in the second adsorber (3b) regenerated in the first step of the feed gas into the second adsorbed waste gas and a second product gas,
        - regeneration or elution of the first adsorber (3a) and desorption of the first waste gas adsorbed in the first adsorber (3a) in the first step.

15. Process according to claim 13, carried out by the unit according to claim 10 or 11 or according to claim 12 in its dependence on claim 10 or 11, in which process the feed gas is a regeneration or elution gas and the discharge gas is a product gas, the unit being supplied with feed gas,

wherein the first step further comprises the following steps :

        - regeneration or elution of the first adsorber (3a) supplied with regeneration or elution gas and desorption of a first waste gas adsorbed in the first adsorber,
        - separation of the feed gas in the second adsorber (3a) into a second adsorbed waste gas and a second product gas,

wherein the second step further comprises the following steps :

        - regeneration or elution of the second adsorber (3b) supplied with regeneration gas or elution and desorption of the second waste gas adsorbed in the first step,
        - separation in the first adsorber (3a) regenerated during the first stage of the feed gas into the first adsorbed waste gas and a first product gas.

[FIG.1]

[FIG.2]

[FIG.3]

[FIG.4]

[FIG.5]

[FIG.6]

[FIG.7]

**EP 4 371 647 B1**

## RÉFÉRENCES CITÉES DANS LA DESCRIPTION

**Documents brevets cités dans la description**

- US 2018280865 A1